(19) Europäisches Patentamt / European Patent Office / Office européen des brevets

(11) **EP 3 776 378 B1**

(12) **EUROPEAN PATENT SPECIFICATION**

(45) Date of publication and mention
of the grant of the patent:
**06.05.2026 Bulletin 2026/19**

(51) International Patent Classification (IPC):
**G06N 3/08** *(2023.01)*    **G06N 3/04** *(2023.01)*

(52) Cooperative Patent Classification (CPC):
**G06N 3/088; G06N 3/044; G06N 3/0442;
G06N 3/045; G06N 3/09;** G06N 3/049

(21) Application number: **19849150.8**

(22) Date of filing: **07.06.2019**

(86) International application number:
**PCT/KR2019/006880**

(87) International publication number:
**WO 2020/036297 (20.02.2020 Gazette 2020/08)**

(54) **ELECTRONIC APPARATUS AND CONTROLLING METHOD THEREOF**

ELEKTRONISCHE VORRICHTUNG UND STEUERUNGSVERFAHREN DAFÜR

APPAREIL ÉLECTRONIQUE ET PROCÉDÉ DE COMMANDE ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.08.2018 KR 20180096368**

(43) Date of publication of application:
**17.02.2021 Bulletin 2021/07**

(73) Proprietor: **Samsung Electronics Co., Ltd.
Suwon-si 16677 (KR)**

(72) Inventor: **USHAKOV, Yury
Suwon-si Gyeonggi-do 16677 (KR)**

(74) Representative: **Taor, Simon Edward William et al
Venner Shipley LLP
200 Aldersgate
London EC1A 4HD (GB)**

(56) References cited:
**WO-A1-2017/201511      CN-A- 107 464 559
US-A- 5 960 391      US-B1- 6 601 051**

- **ZHANG YONG ET AL: "A Digital Liquid State Machine With Biologically Inspired Learning and Its Application to Speech Recognition", IEEE TRANSACTIONS ON NEURAL NETWORKS AND LEARNING SYSTEMS, IEEE, PISCATAWAY, NJ, USA, vol. 26, no. 11, 1 November 2015 (2015-11-01), pages 2635 - 2649, XP011586988, ISSN: 2162-237X, [retrieved on 20151016], DOI: 10.1109/TNNLS.2015.2388544**
- **VERSTRAETEN D ET AL: "Isolated word recognition with the Liquid State Machine: a case study", INFORMATION PROCESSING LETTERS, AMSTERDAM, NL, vol. 95, no. 6, 30 September 2005 (2005-09-30), pages 521 - 528, XP027629658, ISSN: 0020-0190, [retrieved on 20050930]**
- **WANG QIAN ET AL: "D-LSM: Deep Liquid State Machine with unsupervised recurrent reservoir tuning", 2016 23RD INTERNATIONAL CONFERENCE ON PATTERN RECOGNITION (ICPR), IEEE, 4 December 2016 (2016-12-04), pages 2652 - 2657, XP033085985, DOI: 10.1109/ICPR.2016.7900035**
- **JIN YINGYEZHE ET AL: "SSO-LSM: A Sparse and Self-Organizing architecture for Liquid State Machine based neural processors", 2016 IEEE/ACM INTERNATIONAL SYMPOSIUM ON NANOSCALE ARCHITECTURES (NANOARCH), ACM, 18 July 2016 (2016-07-18), pages 55 - 60, XP032959575, DOI: 10.1145/2950067.2950100**

EP 3 776 378 B1

- **STEFAN KOK: "Liquid State Machine Optimization", MASTER'S THESIS, 2007, pages 1 - 82, XP055687305**

## Description

## Technical Field

The disclosure relates to an artificial intelligence (AI) system simulating functions such as recognition, determination, etc. of a human brain by utilizing a machine learning algorithm such as deep learning and the like, an electronic apparatus for performing an application thereof, and a controlling method thereof.

## Background Art

An artificial intelligence (AI) system is a computer system realizing intelligence of a human level, which is a system in which a machine learns and performs determination on its own and a recognition rate is improved as the machine is used.

In recent years, an artificial intelligence (AI) system realizing intelligence of a human level has been used in various fields. An artificial intelligence (AI) system is a system in which a machine learns and performs determination on its own, unlike the existing rule-based smart system. In the AI system, a recognition rate is improved and user preferences are more accurately understood as it is used more, and thus the existing rule-based smart system has been eventually replaced with an artificial intelligence system based on deep learning.

Artificial intelligence technology includes machine learning (for example, deep learning), and element technology utilizing machine learning.

Machine learning is an algorithm technology that classifies and learns features of input data on its own. Element technology is a technology that simulates functions such as recognition, determination, etc. of a human brain by utilizing a machine learning algorithm such as deep learning and the like, which may include technical fields such as linguistic understanding, visual understanding, inference/prediction, knowledge expression, motion control and the like.

Various fields to which the artificial intelligence technology is applicable are shown below. Linguistic understanding is a technology of recognizing languages and characters of human, and applying and processing the recognized human languages and characters, which may include natural language processing, machine translation, dialogue system, question and answer, voice recognition and synthesis, etc. Visual understanding is a technology of recognizing and processing an object just like a human vision, which may include object recognition, object tracking, image search, human recognition, scene understanding, space understanding, image improvement, etc. Inference and prediction is a technique of identifying information to perform logical inference and prediction, which may include knowledge/probability-based inference, optimization prediction, preference-based planning, recommendation, etc. Knowledge expression is a technique of performing automatic processing of human experience information as knowledge data, which may include knowledge construction (data generation/classification), knowledge management (data utilization), etc. Motion control is a technique of controlling autonomous driving of a vehicle and a robot motion, which may include a motion control (navigation, collision and driving), manipulation control (behavior control), etc. Zhang Yong et al: "A Digital Liquid State Machine With Biologically Inspired Learning and Its Application to Speech Recognition", IEEE TRANSACTIONS ON NEURAL NETWORK AND LEARNING SYSTEMS, vol. 26, no. 11 and Wang Qian et al: "D-LSM: Deep Liquid State Machine with-unsupervised recurrent reservoir tuning",2016 23RD INTERNATIONAL CONFERENCE ON PATTERN RECOGNITION (ICPR), IEEE, 4 December 2016 (2016-12-04), pages 2652-2657 relate to the use of a liquid state machine in speech recognition.

The above information is presented as background information only to assist with an understanding of the disclosure. No determination has been made, and no assertion is made, as to whether any of the above might be applicable as prior art with regard to the disclosure.

## Disclosure of Invention

## Technical Problem

Meanwhile, the performance of a machine learning algorithm may differ depending on a data input to the artificial intelligence system. In addition, the performance of the machine learning algorithm may differ depending on a situation in which data is input. In general, there may be situations where noise is heard or image data is broken. Such a situation may be regarded that noise is present. In a case that noise is present in an input data, the performance of the machine learning algorithm may be deteriorated. Accordingly, a data preprocessing operation of preprocessing input data is demanded. Here, a recognition rate of an artificial machine learning algorithm may differ depending on a data preprocessing process. Accordingly, a method for improving performance of a machine learning algorithm while minimizing a data processing is demanded.

## Solution to Problem

Aspects of the disclosure are to address at least the above-mentioned problems and/or disadvantages and to provide at least the advantages described below. The invention is described in independent claims 1, 10 and 13. Accordingly, an aspect of the disclosure is to provide an electronic apparatus preprocessing an input data by using a liquid-state machine (LSM) model, and a controlling method thereof.

In accordance with an aspect of the disclosure, an electronic apparatus is provided. The electronic apparatus includes a storage configured to store a liquid-state machine (LSM) model and a recurrent neural networks (RNN) model, and a processor configured to input a feature data acquired from an input data for machine learning algorithm to the LSM model, process the input feature data using the LSM model; to input an output value output by the LSM model to the RNN model, to process the output value output by the LSM model using the RNN model; and to identify whether a preset object is included in the input data based on an output value output by the RNN model. The RNN model is trained by a sample data related to the preset object. The LSM model includes a plurality of interlinked neurons. A weight applied to a link between the plurality of interlinked neurons is identified based on a spike at which a neuron value is greater than or equal to a preset threshold in a preset unit time.

The LSM model may, based on a number of the spikes being greater than a target number during the preset unit time in an arbitrary neuron from among the plurality of interlinked neurons, reduce a weight corresponding to a link of the neuron, and based on a number of the spikes being less than the target number during the preset unit time period in the arbitrary neuron, or increase a weight corresponding to a link of the neuron.

A weight of a link between an arbitrary transmitting neuron and a receiving neuron corresponding to the transmitting neuron from among the plurality of interlinked neurons may be acquired based on a first number of spikes at which a neuron value of the transmitting neuron is greater than or equal to the preset threshold in the preset unit time and a second number of spikes at which a neuron value of the receiving neuron is greater than or equal to the preset threshold in the preset unit time.

A weight of the link in a current unit time may be acquired by adding a change amount to a weight of the link in a previous unit time. The change amount may be acquired based on a value calculated by a target number of the spikes, the first number and the second number.

The LSM model may set an initial target number of the spikes to a preset minimum value, and increase the set target number by a preset number by the preset unit time.

The LSM model may acquire an information entropy value of the transmitting neuron by the preset unit time based on a difference of occurrence time between spikes of the transmitting neuron, based on an information entropy value of each of the plurality of interlinked neurons being acquired, acquire a sum of the acquired entropy values, and set a target number set in a time period where the sum reaches a maximum value as a final target number.

The LSM model may, based on the second number being greater than the target number, set the change amount to be a negative number.

The LSM model may, based on the second number being less than the target number, set the change amount to be a positive number.

The LSM model may, based on the second number being equal to the target number, set the change amount to be 0.

The weight may be identified based on the mathematical formula shown below:

$$\delta w_{ij} = -\alpha \left| w_{ij} \right| n_i \delta n_j$$

The wij is a weight corresponding to a link from an i neuron which is a transmitting neuron to a j neuron which is a receiving neuron, $\delta$wij is a change amount of the weight, $\alpha$ is a preset constant, ni = Ni / NT (where Ni is the number of spikes of the i neuron in a preset unit time, and NT is a target number of spikes), and nj = Nj / NT (where Nj is the number of spikes of the j neuron in a preset unit time, and NT is a target number of spikes), $\delta$nj=nj-1.

The feature data may be at least one of a Fourier transform coefficients or a Mel-frequency cepstral coefficients (MFCC). The processor may be configured to input at least one of the Fourier transform coefficients or the Mel-frequency cepstral coefficients (MFCC) to the LSM model.

The LSM model may convert the feature data changing over time to a spatio-temporal pattern based on an activity of the plurality of neurons, and output the converted spatio-temporal pattern.

The electronic apparatus according to an embodiment of the disclosure may further include a microphone. The input data may be a speech data acquired through the microphone. The preset object may be a wake-up word.

In accordance with an aspect of the disclosure, a controlling method of an electronic apparatus for storing a liquid-state machine (LSM) model and a recurrent neural networks (RNN) model is provided. The controlling method includes acquiring a feature data from an input data for machine learning algorithm, inputting the acquired feature data to the LSM model, processing the input feature data using the LSM model; inputting an output value output by the LSM model to the RNN model, processing the output value output by the LSM model using the RNN model; and identifying whether a preset object is included in the input data based on an output value output by the RNN model. The RNN model may be trained by a sample data related to the preset object. The LSM model may include a plurality of interlinked neurons. A weight applied to a link between the plurality of neurons may be identified based on a spike at which a neuron value is greater than or equal to a preset threshold by a preset unit time.

The LSM model may, based on a number of the spikes being greater than a target number during the preset unit time in an arbitrary neuron from among the plurality of interlinked neurons, reduce a weight corresponding to a link of the neuron, and based on a number of the spikes being less than the target number during the preset unit time period in the arbitrary neuron, increase a weight corresponding to a link of the neuron.

A weight of a link between an arbitrary transmitting neuron and a receiving neuron corresponding to the transmitting neuron from among the plurality of interlinked neurons may be acquired based on a first number of spikes at which a neuron value of the transmitting neuron is greater than or equal to the preset threshold in the preset unit time and a second number of spikes at which a neuron value of the receiving neuron is greater than or equal to the preset threshold in the preset unit time.

A weight of the link in a current unit time may be acquired by adding a change amount to a weight of the link in a previous unit time. The change amount may be acquired based on a value calculated by a target number of the spikes, the first number and the second number.

The LSM model may set an initial target number of the spikes to a preset minimum value, and increase the set target number by a preset number by the preset unit time.

The LSM model may acquire an information entropy value of the transmitting neuron by the preset unit time based on a difference of occurrence time between spikes of the transmitting neuron, based on an information entropy value of each of the plurality of interlinked neurons being acquired, acquire a sum of the acquired entropy values, and set a target number set in a time period where the sum reaches a maximum value as a final target number.

The LSM model may, based on the second number being greater than the target number, set the change amount to be a negative number, based on the second number being less than the target number, set the change amount to be a positive number, and based on the second number being equal to the target number, set the change amount to be 0.

The weight may be identified based on the mathematical formula shown below:

$$\delta w_{ij} = -\alpha \left| w_{ij} \right| n_i \delta n_j$$

The wij is a weight corresponding to a link from an i neuron which is a transmitting neuron to a j neuron which is a receiving neuron, $\delta wij$ is a change amount of the weight, $\alpha$ is a preset constant, $ni = Ni / NT$ (where Ni is the number of spikes of the i neuron in a preset unit time, and NT is a target number of spikes), and $nj = Nj / NT$ (where Nj is the number of spikes of the j neuron in a preset unit time, and NT is a target number of spikes), $\delta nj=nj-1$.

In accordance with an aspect of the disclosure, a non-transitory computer readable medium configured to store computer instructions that, when executed by a processor of an electronic apparatuses in which a liquid-state machine (LSM) model and a recurrent neural networks (RNN) model are stored, causes the electronic apparatus to perform an operation is provided. The operation includes acquiring a feature data from an input data for machine learning algorithm, inputting the acquired feature data to the LSM model, processing the input feature data using the LSM model; inputting an output value output by the LSM model to the RNN model, processing the output value output by the LSM model using the RNN model; and identifying whether a preset object is included in the input data based on an output value output by the RNN model. The RNN model is trained by a sample data related to the preset object. The LSM model includes a plurality of interlinked neurons. A weight applied to a link between the plurality of interlinked neurons is identified based on a spike at which a neuron value is greater than or equal to a preset threshold in a preset unit time.

Other aspects, advantages, and salient features of the disclosure will become apparent to those skilled in the art from the following detailed description, which, taken in conjunction with the annexed drawings, discloses various embodiments of the disclosure.

## Brief Description of Drawings

The above and other aspects, and advantages of certain embodiments of the disclosure will be more apparent from the following description taken in conjunction with the accompanying drawings, in which:

FIG. 1A is a block diagram illustrating an electronic apparatus, according to an embodiment of the disclosure;
FIG. 1B is a block diagram illustrating a detailed configuration of an example electronic apparatus;
FIG. 2 is a flowchart provided to explain a process of a machine learning algorithm, according to an embodiment of the disclosure;
FIG. 3 is a diagram provided to explain a neural network of a liquid state machine (LSM) model;
FIG. 4 is a diagram provided to explain a calculation process of a liquid state machine (LSM) model;
FIG. 5 is a diagram provided to explain an information entropy of a liquid state machine (LSM) model;
FIG. 6 is a diagram provided to explain a learning algorithm of a liquid state machine (LSM) model;
FIG. 7 is a diagram provided to explain an information entropy of a liquid state machine (LSM) model according to FIG. 6;
FIG. 8 is a flowchart provided to explain a controlling method of an electronic apparatus, according to an embodiment of the disclosure;
FIG. 9 is a block diagram provided to explain a configuration of an electronic apparatus for training and using an artificial intelligence model, according to an embodiment of the disclosure;
FIG. 10A and 10B are a block diagram of a specific configuration of a learning part and an identification part, according to an embodiment of the disclosure; and

FIG. 11 is a block diagram of a specific configuration of a learning part and an identification part, according to an embodiment of the disclosure.

The same reference numerals are used to represent the same elements throughout the drawings.

## Mode for the Invention

Before specifically describing the disclosure, a method for demonstrating the disclosure and drawings will be described.

First of all, the terms used in the disclosure and the claims are general terms selected in consideration of the functions of the various embodiments of the disclosure. However, these terms may vary depending on intention, legal or technical interpretation, emergence of new technologies, and the like of those skilled in the related art. Also, there may be some terms arbitrarily selected by an applicant. Unless there is a specific definition of a term, the term may be construed based on the overall contents and technological common sense of those skilled in the related art.

Also, the same reference numerals or symbols described in the attached drawings denote parts or elements that actually perform the same functions. For convenience of descriptions and understanding, the same reference numerals or symbols are used and described in different embodiments. In other words, although elements having the same reference numerals are all illustrated in a plurality of drawings, the plurality of drawings do not mean one embodiment.

Further, the terms including numerical expressions such as a first, a second, and the like may be used to explain various components, but there is no limitation thereto. The ordinal numbers are used in order to distinguish the same or similar elements from one another, and the use of the ordinal number should not be understood as limiting the meaning of the terms. In embodiments of the disclosure, relational terms such as first and second, and the like, may be used to distinguish one entity from another entity, without necessarily implying any actual relationship or order between such entities. For example, used orders, arrangement orders, or the like of elements that are combined with these ordinal numbers may not be limited by the numbers. The respective ordinal numbers are interchangeably used, if necessary.

The singular expression also includes the plural meaning as long as it does not differently mean in the context. The terms "include", "comprise", "is configured to," etc., of the description are used to indicate that there are features, numbers, steps, operations, elements, parts or combination thereof, and they should not exclude the possibilities of combination or addition of one or more features, numbers, steps, operations, elements, parts or a combination thereof.

The disclosure may have several embodiments, and the embodiments may be modified variously. In the following description, specific embodiments are provided with accompanying drawings and detailed descriptions thereof. However, this does not necessarily limit the scope of the embodiments to a specific embodiment form.

The term such as "module," "unit," "part", and so on is used to refer to an element that performs at least one function or operation, and such element may be implemented as hardware or software, or a combination of hardware and software. Further, except for when each of a plurality of "modules", "units", "parts", and the like needs to be realized in an individual hardware, the components may be integrated in at least one module or chip and be realized in at least one processor.

Also, when any part is connected to another part, this includes a direct connection and an indirect connection through another medium. Further, when a certain portion includes a certain element, unless specified to the contrary, this means that another element may be additionally included, rather than precluding another element.

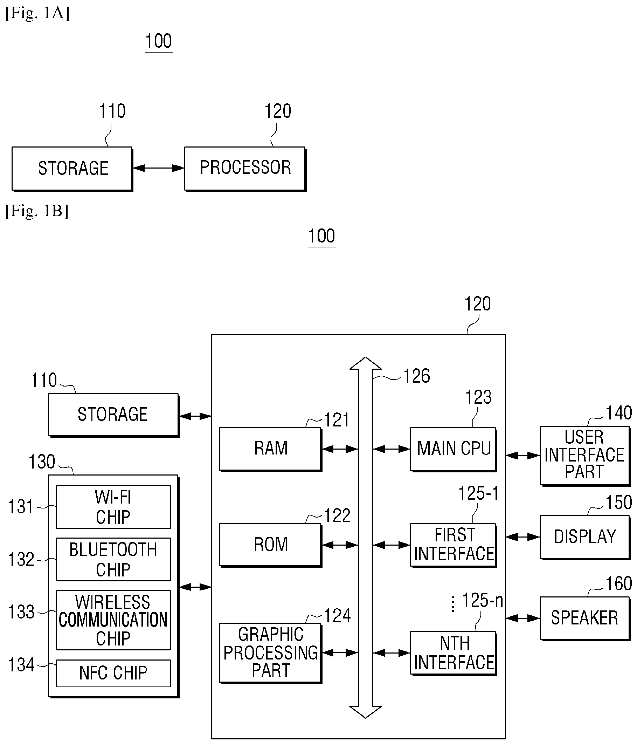

FIG. 1A is a block diagram illustrating an electronic apparatus, according to an embodiment of the disclosure.

Referring to FIG. 1A, an electronic apparatus 100 may include a storage 110 and a processor 120.

The electronic apparatus 100 may be implemented as a TV, desktop PC, notebook PC, smartphone, tablet PC, server, etc. Alternatively, the electronic apparatus 100 may be implemented as a system itself in which a clouding computing environment is constructed, that is, a cloud server.

The storage 110 may store a liquid-state machine (LSM) learning model and a recurrent neural networks (RNN) learning model.

Here, the RNN learning model may be a type of artificial neural network in which a connection between units (nodes or neurons) is directional according to a sequence. For example, it may be an artificial neural network (ANN) including multiple hidden layers between an input layer and an output layer. An RNN learning model according to an embodiment of the disclosure may be trained by a sample data related to a preset object. An LSM learning model is a spike neural network including a large set of units (nodes or neurons), and the respective units (nodes or neurons) may acquire an input data according to time from an external source or another unit (node or neuron). In addition, the LSM learning model may convert a feature data changing according to time to a spatio-temporal pattern based on an activity of a plurality of neurons, and output the spatio-temporal pattern. For example, the LSM learning model may be a set of excitatory units respectively including a memory, and based on an interconnection and temporal dynamics between the units, spontaneously perform conversion of a multidimensional input. That is, an LSM may map an input vector to a high-dimensional space and thereby, an RNN can be more effectively trained.

An LSM learning model according to an embodiment of the disclosure may include a plurality of neurons linked to each other and may be, according to various embodiments of the disclosure, a learning model to which a weight is applied to links between the plurality of neurons.

Meanwhile, the RNN learning model and the LSM learning model may be models for which an artificial intelligence training has been performed in the electronic apparatus 100, but may also be a model which is trained in at least one external apparatus or external server and then, stored in the electronic apparatus 100.

The storage 110 may be implemented as an internal memory such as ROM, RAM and the like, included in the processor 120, or may be implemented as a memory separate from the processor 120. In this case, the storage 110 may be implemented as, according to a use of data storage, a memory embedded in the electronic apparatus or a memory detachable from the electronic apparatus 100. For example, a data for driving of the electronic apparatus 100 may be stored in a memory embedded in the electronic apparatus 100, and a data for extension function of the electronic apparatus 100 may be stored in a memory detachable from the electronic apparatus 100. A memory embedded in the electronic apparatus 100 may be implemented as a non-volatile memory, volatile memory, hard disk drive (HDD) or solid state drive (SSD), and a memory detachable from the electronic apparatus 100 may be implemented as a memory card (for example, micro SD card, USB memory, etc.) or an external memory connectable to a USB port (for example, USB memory).

The processor 120 includes various processing circuitry and controls a general operation of the electronic apparatus 100.

According to an embodiment, the processor 120 may be implemented as a digital signal processor (DSP), a microprocessor and a time controller (TCON), but is not limited thereto. The processor 120 may include at least one from among various processing circuitry such as, for example, and without limitation, a central processing unit (CPU), a micro controller unit (MCU), a micro processing unit (MPU), a controller, an application processor (AP), a communication processor (CP) or an ARM processor, or may be defined as the corresponding term. In addition, the processor 140 may be implemented as a system on chip (SoC) with a built-in processing algorithm, and a large scale integration (LSI) and may be implemented as a field programmable gate array (FPGA).

According to an embodiment, the processor 120 may acquire feature data from an input data, and input the acquired feature data to an LSM model. However, it is possible to transmit an input data to an external server and acquire feature data acquired from the input data from the external server.

In addition, the processor 120 may input an output value of the LSM model to the RNN model, and identify whether a preset object is included in the input data based on an output value of the RNN model.

The LSM learning model may, in general, correspond to a feature preprocessor for a so-called read-out module, which is a simple feed-forward artificial neural network (ANN). For example, before the feature data is input to the RNN learning model, a data preprocessing operation may be performed using the LSM learning model.

Meanwhile, the processor 120 may apply a preset transformation function to an input data and acquire feature data (for example, feature vector). For example, the processor 120 may apply a preset transformation function in units of at least one frame and acquire feature data. Here, feature data may be at least one of Fourier transform coefficients or Mel-Frequency cepstral coefficients.

The processor 120 may identify whether a preset object is included in the input data based on an output value of the RNN model. An RNN learning model according to an embodiment of the disclosure is trained by a sample data related to the preset object and thus, the processor 120 may identify whether the preset object is included in the input data based on an output value of the RNN learning model. Here, a preset object may denote a voice data for a specific term or an image data for a specific image. In addition, a preset object may denote text information for a particular word.

For example, the LSM learning model may include a plurality of neurons linked to each other. Here, a weight applied to links between the plurality of neurons may be determined based on a spike at which a neuron value is greater than or equal to a preset threshold in units of a preset time.

Meanwhile, an LSM model according to an embodiment may include a plurality of neurons linked to each other. Here, a weight applied to links between the plurality of neurons may be determined based on a spike at which a neuron value is greater than or equal to a preset threshold in units of a preset time.

Here, a preset unit time may denote any one of a constant unit time, time period or unit time period. In addition, it may denote a time period preset by a user or a time period of an appointed form.

In addition, a spike may be expressed in any one of a number, amount or ratio. For example, the LSM model may be compared by identifying the number of spikes. In addition, the LSM model may compare a ratio of spike. For example, a ratio occupied by a spike for the entire time period may be calculated. In addition, the LSM model may compare an amount of spike.

Further to the examples described above, a spike may be expressed in various ways. In the description provided below, the number of spikes is described as an example, but other various methods may be used to describe a spike.

For example, the LSM model may be trained to, if the number of spikes is greater than a target number for a preset time period in an arbitrary neuron from among a plurality of neurons, reduce a weight corresponding to a neuron link, and if the number of spikes is less than the target number for the preset time period in the arbitrary neuron, increase a weight corresponding to the neuron link.

For example, a weight of link between an arbitrary transmitting neuron and a receiving neuron corresponding to the transmitting neuron from among a plurality of neurons may be acquired based on a first number of spikes at which a neuron value of the transmitting neuron is greater than or equal to a preset threshold in a preset unit time period and a second number of spikes at which a neuron value of the receiving neuron is greater than or equal to the preset threshold in the preset unit time period.

In addition, a weight of link in a current time period may be acquired by adding a change amount to a weight of link in a previous time period, and the change amount may be acquired based on a value calculated by a target number, first number and second number of spikes.

In this case, the LSM model may set an initial target number of spikes as a preset minimum value, and increase a target number set for each preset unit time period by a preset number.

The LSM model may acquire an information entropy value of a transmitting neuron in units of a preset time period based on a difference of occurrence time between spikes of the transmitting neuron, when information entropy values of a plurality of neurons are acquired, add the acquired entropy values, and set a target number set in a time period at which the sum reaches a maximum value as a final target number.

An LSM model according to an embodiment may, if the second number is greater than the target number, set a change amount as a negative number. In addition, the LSM model may, if the second number is less than the target number, set a change amount as a positive number. In addition, the LSM model may, if the second number is equal to the target number, set a change amount as 0.

For example, the LSM learning model may calculate a weight applied to a link between the respective neurons based on mathematical formulas 1 to 5, for specific calculation.

First, the LSM learning model may calculate a neuron value for each neuron through mathematical formula 1.

Here, the vi(n) may denote a membrane potential (neuron value) of an i-th neuron at a time n.

The $\mu$ may be a number less than 1 ($\mu < 1$), which may be a constant parameter guaranteeing attenuation of vi.

The Ii(n) may be a total input with respect to a neuron at the time n.

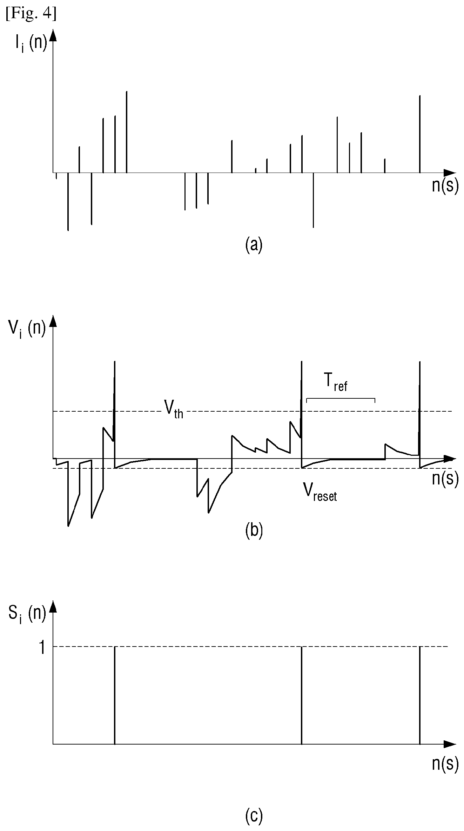

The vth may denote a threshold. Here, the LSM learning model may, if a neuron value of a neuron is greater than vth, set the neuron value as v_reset. Meanwhile, the LSM learning model may, if a neuron value of a neuron is less than vth, acquire a value obtained by adding an input value to a neuron value of the previous time as a neuron value of a current time. In addition, the LSM learning model may be controlled not to react to inputs during a particular refractory time period Tref (see Tref of FIG. 4B).

If a neuron value is less than vth, a neuron value of an i neuron with respect to a current time n may be obtained by multiplying a neuron value with respect to a previous time n-1 by $\mu$ and adding an input value Ii(n) with respect to the current time n to the multiplication result.

Meanwhile, at a crossing threshold time, a neuron may generate a spike and a single impulse may be transferred to another neuron of the network. In other words, at all crossing threshold times, a Si(n) of a nerve cell may be 1 (Si(n^k_cross) = 1). In addition, at all other times, a Si(n) may be 0.

In addition, an input value Ii(n) with respect to the current time n may be calculated using mathematical formula 2. The Ii(n) may be an input value with respect to an i-th neuron.

[Math.2]

$$I_i(n) = \sum_j w_{ji} s_j(n-1),$$

Here, the wji may be a weight of link which is linked from a j-th neuron to an i-th neuron (a counterpart link linked from the i-th neuron to the j-th neuron may be present as well.). Here, an i and j may be neuron index numbers. When it is assumed that the i neuron and the j neuron are linked to each other, the wji may denote a case where the j neuron is a transmitting neuron and the i neuron is a receiving neuron. The sj may denote the number of spikes at a generated (identified) preset unit time period. The n may denote a current time.

Here, no output unit is specifically designated, and a network output may be acquired as time-varying vectors of "0" and "1" (s0(n), s1(n), ...). In addition, the LSM learning model may select an arbitrary subset. For example, to reduce an input dimension of a read value, 30% of an LSM neural network may be used as an output unit.

[Math.1]

$$v_i(n) = \begin{cases} \mu v_i(n-1) + I_i(n), & \text{if r.h.s} < v_{th,} \\ v_{reset,} & \text{otherwise,} \end{cases}$$

An LSM learning model may be used by using the mathematical formulas 1 and 2. Here, an operation of changing a weight may be added.

A change to a weight used in the mathematical formula 2 shown above may be calculated by the mathematical formulas 3 and 4.

The LSM learning model may initialize the network with a random weight wij. In addition, an input data may be input as a vector and the respective neurons may generate a spike. The LSM learning model may compare an "activity" of each neuron with other activities after a predetermined number (so called "mini-batches") of input data are acquired. In addition, the LSM learning model may lead the network to be "an active distribution" based on a selected input data.

The "activity" may be measurable and controllable by changing the wij. Herein, it may be the number of spikes generated during mini-batch (a preset unit time period). In an actual learning process, the average number of spikes per mini-batch in a specific neuron may be greater or less. This value may be selected during learning according to criteria for maximum output entropy production (measured as an entropy per mini-batch).

In addition, the LSM learning model may include a two-step algorithm. A first step may denote a step in a state of a highest activity level (scan state, scan phase). In addition, a second step may denote a step of learning at the corresponding level.

Meanwhile, the LSM learning model may change a weight using the mathematical formulas 3 and 4 shown below.

A weight with respect to a time n may be expressed as $wij(n) = wij(n-1) + \delta wij$. A weight with respect to a current time may be acquired by adding $\delta wij$ to a weight with respect to the entire time. The $\delta wij$ may be calculated by the mathematical formula 3.

[Math.3]

$$\delta w_{ij} = -\alpha \left| w_{ij} \right| n_i \delta n_j$$

The wij may denote a weight corresponding to a link between an i neuron which is a transmitting neuron and a j neuron which is a receiving neuron.

The $\delta wij$ may denote a change amount of weight. The $\alpha$ may be a normal constant in which an adaptive step is reflected.

The $\delta nj$ may be calculated as $\delta nj = (nj) - 1 = (Nj / NT) - 1$.

The ni may denote a ratio of the number of spikes generated in the i neuron to a target number, which may be expressed as $ni = Ni / NT$.

The nj may denote a ratio of the number of spikes generated in the j neuron to a target number, which may be expressed as $nj = Nj / NT$.

The Ni may denote the number of spikes of i-th neuron generated (identified) in a feature data as much as an input mini-batch.

The Nj may denote the number of spikes of j-th neuron generated (identified) in a feature data as much as an input mini-batch.

The NT may denote a target average number of spikes per mini-batch, which may refer to a target number.

Here, an average number may denote the number of spikes generated per mini-batch, and criteria for analyzing data may be set as an M number of mini-batches and thus, the LSM learning model may use an average number per mini-batch.

For example, if the wij has a positive (excitatory or activating) value and $\delta nj > 0$, it may denote that the j neuron, which is a receiving neuron, is more active than what is desired (NT) (Nj > NT).

In this case, when $\delta nj = (nj) - 1 = (Nj / NT) - 1$ is reflected, it may be that $\delta nj > 0$.

In this case, it may be that $\delta wij < 0$, and when $wij(n) = wij(n-1) + \delta wij$ is reflected, a weight with respect to a current time may be reduced.

In contrast, if the wij has a positive (excitatory or activating) value and $\delta nj > 0$, it may denote that the j neuron, which is a receiving neuron, is less active than what is desired (NT) (Nj < NT).

In this case, when $\delta nj = (nj) - 1 = (Nj / NT) - 1$ is reflected, it may be that $\delta nj < 0$.

In this case, it may be that $\delta wij > 0$, and when $wij(n) = wij(n-1) + \delta wij$ is reflected, a weight with respect to a current time may be increased.

For example, the LSM learning model may, if the number of spikes generated (identified) during a preset time period in an arbitrary neuron from among a plurality of neurons is greater than a target number, reduce a weight corresponding to the neuron link. For example, the LSM learning model may, if the number of spikes generated (identified) during a preset time period in an arbitrary neuron from among a plurality of neurons is greater than a target number, reduce a weight corresponding to the neuron link.

In addition, a weight of link between an arbitrary transmitting neuron and a receiving neuron corresponding to the transmitting neuron from among a plurality of neurons may be acquired based on a first number of spikes Ni at which a neuron value of the transmitting neuron is greater than or equal to a preset threshold in a preset unit time period and a second number of spikes Nj at which a neuron value of the receiving neuron is greater than or equal to the preset threshold in the preset unit time period.

A weight of link in a current time period may be acquired by adding a change amount to a weight of link in a previous time period, and the change amount may be acquired based on a value calculated by a target number NT, a first number of spikes Ni and a second number Nj of spikes.

For example, the LSM learning model may, if the second number Nj is greater than the target number NT, set a weight change amount δwij to be a negative number.

In addition, the LSM learning model may, if the second number Nj is less than the target number NT, set a weight change amount δwij to be a positive number.

In addition, the LSM learning model may, if the second number Nj is equal to the target number NT, set a weight change amount δwij to be 0.

The mathematical formula 3 is applicable when the transmitting neuron is the i neuron and the receiving neuron is the j neuron. In contrast, there may be cases where the transmitting neuron is the j neuron and the receiving neuron is the i neuron. In this case, the mathematical formula 4 for which some modifications are made to the mathematical formula 3 may be used.

In addition, when the mathematical formula 4 is applied, the first number described above may be Nj and the second number may be Ni.

[Math.4]

$$\delta w_{ji} = -\alpha \left| w_{ji} \right| n_j \delta n_i$$

The wji may denote a weight corresponding to a link between a j neuron which is a transmitting neuron and an i neuron which is a receiving neuron.

The δwji may denote a change amount of weight. The $\alpha$ may be a normal constant in which an adaptive step is reflected.

The δni may be calculated as δni = (ni) - 1 = (Ni / NT) - 1.

The nj may denote a ratio of the number of spikes generated in the j neuron to a target number, which may be expressed as nj = Nj / NT.

The ni may denote a ratio of the number of spikes generated in the i neuron to a target number, which may be expressed as ni = Ni / NT.

The Nj may denote the number of spikes of j-th neuron generated (identified) in a feature data as much as an input mini-batch.

The Ni may denote the number of spikes of i-th neuron generated (identified) in a feature data as much as an input mini-batch.

The NT may denote a target average number of spikes per mini-batch, which may refer to a target number.

For example, if the wji has a positive (excitatory or activating) value and δni > 0, it may denote that the i neuron, which is a receiving neuron, is more active than what is desired (NT) (Ni > NT).

In this case, when δni = (ni) - 1 = (Ni / NT) - 1 is reflected, it may be that δni > 0.

In this case, it may be that δwji < 0, and when wji (n) = wji (n-1) + δwji is reflected, a weight with respect to a current time may be reduced.

In contrast, if the wji has a positive (excitatory or activating) value and δni < 0, it may denote that the i neuron, which is a receiving neuron, is less active than what is desired (NT) (Ni < NT).

In this case, when δni = (ni) - 1 = (Ni / NT) - 1 is reflected, it may be that δni < 0.

In this case, it may be that δwji > 0, and when wji(n) = wji(n-1) + δwji is reflected, a weight with respect to a current time may be increased.

The LSM learning model may change a weight wji corresponding to a link from the j neuron to the i neuron using the mathematical formula 4. In addition, the LSM learning model may apply the changed wji to the mathematical formula 2.

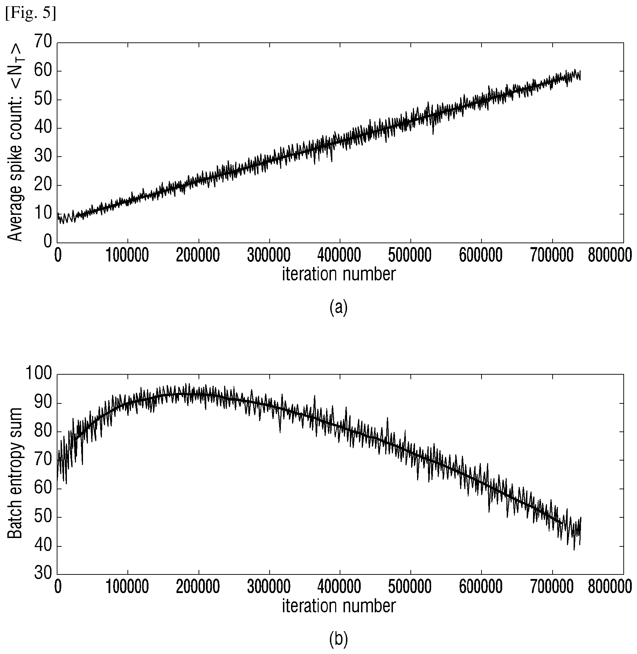

Here, the NT may denote a target number, and the LSM learning model may change a target number when a preset unit time period elapses. Here, a preset unit time period may be one mini-batch. In addition, a preset unit time period may be an M number of mini-batches described with reference to FIG. 5, according to user settings.

In the two steps described above, at the first step, a target number NT may be constantly increased and at the second step, a target number NT may remain constant.

For example, the LSM model may set an initial target number of spikes NT as a preset minimum value Nmin, and increase a target number set for each preset unit time period by a preset number (NT = NT + 1).

The LSM model may acquire an information entropy value of a transmitting neuron in units of a preset time period based on a difference of occurrence time between spikes of the transmitting neuron, when information entropy values of a plurality of neurons are acquired, add the acquired entropy values, and set a target number set in a time period at which the sum reaches a maximum value as a final target number (optimum value, Nopt).

The LSM learning model may learn until an optimum target number is acquired. An optimum target number may be referred to as Nopt, which may be acquired using information entropy.

The information entropy may be acquired using the mathematical formula 5 shown below. The information entropy may be referred to as a Shannon entropy.

The information entropy may denote an expected value (average) of information acquired based on a flow of information.

[Math.5]

$$S_i^b = -\sum_k p_{ik} \ln p_{ik}$$

The S may denote an information entropy.

The i may denote an index of neuron, that is, i neuron.

The b may denote an index of mini-batch.

The k may denote an index of an event that may occur.

The pik may denote a probability that an event k can occur in the i neuron.

That is, the LSM learning model may acquire an information entropy of the i-th neuron acquired in a b mini-batch as an output value using the mathematical formula 5.

The LSM learning model may calculate an information entropy based on inter-spike intervals (ISI).

The ISI may denote a time period between two spikes. Referring to FIG. 4C, when three spikes are present, two ISI may be present.

The i-th neuron may generate Ni spikes during mini-batch. Along the same lines, at the i-th neuron, Ni spikes may be measured during mini-batch. In addition, a(Ni-1) number of ISI included in an ISI distribution histogram may be present.

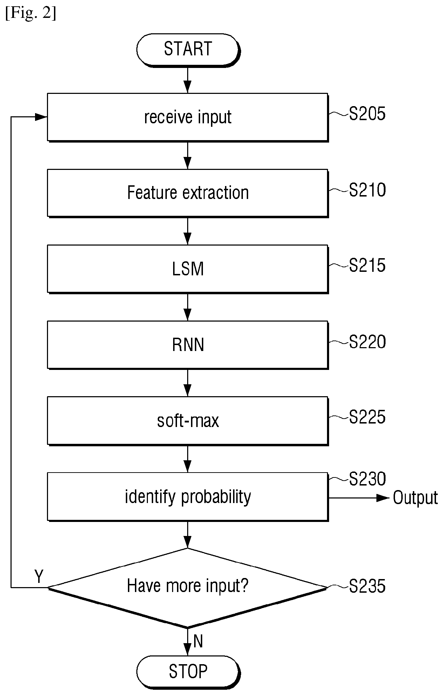

Meanwhile, the electronic apparatus 100 according to an embodiment of the disclosure may be used for voice data recognition. The electronic apparatus 100 may further include a microphone. An input data may be a voice data acquired through the microphone. A preset object described above may be a wake-up word. The detail will be described later with reference to FIG. 2.

An artificial intelligence learning model is a determination model which is trained based on an artificial intelligence algorithm, which may be, for example, a model based on a neural network. A trained artificial intelligence model may be designed to simulate human brain structure on the computer and may include a plurality of network nodes with a weight for simulating neurons of a human neural network. The plurality of network nodes may respectively form a connection relationship so that a synaptic activity of neuron in which neurons exchange signals through synapse is simulated. In addition, the trained artificial intelligence model may include, for example, a neural network model or a deep learning model advanced from the neural network model. In the deep learning model, the plurality of network nodes may be located at different depths (or layers) and exchange data according to a convolutional connection relationship. For example, the trained artificial intelligence model may include a deep neural network (DNN), a recurrent neural network (RNN), a bidirectional recurrent deep neural network, etc., but is not limited thereto.

In addition, the electronic apparatus 100 may, to acquire output data as described above, use a program exclusive for artificial intelligence (or artificial intelligence agent). The artificial intelligence-exclusive program is a program exclusive for providing an artificial intelligence-based service, which may be executed by the existing general purpose processor (for example, CPU) or a separate AI-exclusive processor (for example, GPU, etc.).

For example, when a preset user input (for example, a user speech including a preset wake-up word, etc.) is acquired, an artificial intelligence agent may be operated (or executed). In addition, the artificial intelligence agent may transmit information on the preset user input to an external server, and acquire an output content from the external server and output the acquired output content.

When a preset user input is acquired, an artificial intelligence agent may be operated. The artificial intelligence agent may be in a pre-executed state before the preset user input is detected. In this case, after the preset user input is detected, an artificial intelligence agent of the electronic apparatus 100 may acquire an output data. In addition, the artificial intelligence agent may be in a standby state before the preset user input is detected. Here, a standby state may be a state for detecting that a predefined user input to control an operation start of the artificial intelligence agent has been acquired. When a preset user input is detected while the artificial intelligence agent is in a standby state, the electronic apparatus 100 may operate the artificial intelligence agent and acquire an output data.

In another embodiment of the disclosure, when the electronic apparatus 100 directly acquires an output data using an artificial intelligence model, the artificial intelligence agent may control the artificial intelligence model and acquire an output data. The artificial intelligence agent may perform an operation of an external server described above.

Meanwhile, the electronic apparatus 100 according to an embodiment of the disclosure may be implemented as a server, AI speaker and set-top box (STB)/Apple TV capable of realizing an artificial intelligence algorithm.

FIG. 1B is a block diagram illustrating a detailed configuration of an example electronic apparatus.

Referring to FIG. 1B, the electronic apparatus 100 may include a storage 110, a processor 120, a communicator comprising a circuitry 130, a user interface part 140, a display 150, an audio processing part 160 and a video processing part 170. Detailed descriptions of constitutional elements illustrated in FIG. 1B that are redundant with constitutional elements in FIG. 1A are omitted.

The processor 120 may control the overall operations of the electronic apparatus 100 using various programs stored in the storage 110.

For example, the processor 120 may include an RAM 121, a ROM 122, a main CPU 123, a graphic processing part 124, first to n-th interfaces 125-1 to 125-n, and a bus 126.

The RAM 121, the ROM 122, the main CPU 123, the graphic processing part 124, the first to n-th interfaces 125-1 to 125-n, and the like may be connected to each other via the bus 126.

The first to the nth interfaces 125-1 to 125-n may be connected to the various elements described above. One of the interfaces may be a network interface which is connected to an external apparatus via a network.

The main CPU 123 may access the storage 110, and perform booting using an operating system (O/S) stored in the storage 110. In addition, the main CPU 123 may perform various operations using various programs stored in the storage 110.

The ROM 122 may store a set of instructions for system booting. When a turn-on command is input and power is supplied, the main CPU 123 may, according to an instruction stored in the ROM 122, copy the O/S stored in the storage 110 to the RAM 121, and execute O/S to boot the system. If the booting is completed, the main CPU 123 may copy various application programs stored in the storage 110 to the RAM 121 and execute the application programs copied to the RAM 121, thereby performing various operations.

The graphic processing part 124 may provide a screen including various objects such as an icon, an image, a text, and the like using a computing part (not illustrated) and a rendering part (not illustrated). The computing part (not illustrated) may compute attribute values, such as coordinate values at which each object will be represented, forms, sizes, and colors according to a layout of the screen, based on the acquired control instruction. The rendering part (not illustrated) may provide screens of various layouts including the objects based on the attribute values which are computed by the computing part (not illustrated). The screen generated by the rendering part (not illustrated) may be displayed in a display area of the display 150.

Here, the electronic apparatus 100 may directly control the display 150 included in the electronic apparatus 100. The electronic apparatus 100 may identify a content to be displayed on the display 150 and display the identified content on the display 150.

The electronic apparatus 100 according to another embodiment of the disclosure may be implemented to provide a video signal and transfer the generated video signal to an external display apparatus. The electronic apparatus 100 may output a video signal and transmit the output video signal to an external display apparatus 150, and the external display apparatus may acquire the video signal output from the electronic apparatus 100 and display the corresponding content on a display.

The operation of the above-described processor 120 may be performed by a program stored in the storage 110.

The storage 110 may store a variety of data, such as an operating system (O/S) software module for operating the electronic apparatus 100 or an LSM learning module and an RNN learning module.

The communicator comprising the circuitry 130 is an element to perform communication with various types of external apparatuses according to various types of communication methods. The communicator comprising the circuitry 130 may include one or more of a Wi-Fi chip 131, a Bluetooth chip 132, a wireless communication chip 133, and an NFC chip 134. The processor 120 may perform the communication with various external apparatuses by using the communicator comprising the circuitry 130.

The Wi-Fi chip 131 and the Bluetooth chip 132 may perform communication using a Wi-Fi method and a Bluetooth method, respectively. In the case in which the Wi-Fi chip 111 or the Bluetooth chip 112 is used, a variety of access information such as service set identifier (SSID), a session key, and the like may be first transmitted and received, a communication access may be performed using the variety of access information, and a variety of information may be then transmitted and received. The wireless communication chip 133 indicates a chip which performs communication in accordance with various communication standards such as IEEE, Zigbee, 3rd generation (3G), 3rd generation partnership project (3GPP), and long term evolution (LTE) or the like. The NFC chip 154 refers to a chip that operates using a near field communication (NFC) method using a 13.56 MHz band among various RF-ID frequency bands, such as 135 kHz, 13.56 MHz, 433 MHz, 860 to 960 MHz, and 2.45 GHz.

Meanwhile, the electronic apparatus 100 according to another embodiment of the disclosure may not include a display and may be connected to an additional display apparatus. In this case, the processor may control the communicator comprising the circuitry to transmit a video signal and an audio signal to the additional display apparatus.

The display apparatus may include a display and an audio output interface so that a video signal and an audio signal may be acquired and output. The audio output interface may include a speaker, headphone output terminal or S/PDIF output terminal for outputting audio data.

In this case, the electronic apparatus 100 may include an output port for transmitting a video signal and an audio signal to a display apparatus. Here, an output port of the electronic apparatus 100 may be a port capable of simultaneously transmitting a video signal and an audio signal. For example, the output port may be one interface from among high definition multimedia interface (HDMI), display port (DP) or thunderbolt.

Meanwhile, an output port of the electronic apparatus 100 may be configured as a separate port so that a video signal and an audio signal may be respectively transmitted.

In addition, the electronic apparatus 100 may use a wireless communication module to transmit a video signal and an audio signal to a display apparatus. A wireless communication module is a module connected to an external network according to a wireless communication protocol such as Wi-Fi, IEEE and the like, and performing communication. In addition, a wireless communication module may further include a mobile communication module which accesses a mobile communication network according to various mobile communication standards such as 3rd generation (3G), 3rd generation partnership project (3GPP), long term evolution (LTE), LTE advanced (LTE-A) or the like, and performs communication.

The processor 120 may acquire input data and the like, from an external apparatus through the communicator comprising the circuitry 130.

The user interface part 140 may acquire various user interactions. Herein, the user interface part 140 may be implemented in various forms according to implementing embodiments of the electronic apparatus 100. For example, the user interface part 140 may be implemented as a button provided on the electronic apparatus 100, a microphone acquiring a user speech, a camera detecting a user motion, etc. Further, when the electronic apparatus 100 is implemented to be mobile terminal based on touch, the user interface part 140 may be implemented to be touch screen that forms an interlayer structure with a touch pad. In this case, the user interface part 140 may be used as the above-described display 150.

The processor 120 may perform various processing such as decoding, amplification, and noise filtering on the audio data. In addition, the processor 120 may perform various image processing such as decoding, scaling, noise filtering, frame rate converting, and resolution converting regarding video data. The speaker 160 may output the audio signal processed at the processor 120. For example, the speaker 140 may include at least one speaker unit, a D/A converter, an audio amplifier and the like, capable of outputting at least one channel.

Through the method described above, the processor 120 may perform data preprocessing to minimize deterioration of performance by using an RNN model and an LSM model.

Meanwhile, in FIGS. 1A and 1B, the electronic apparatus 100 performs both data reception and machine learning algorithm. However, in an actual implementation, the electronic apparatus 100 may acquire an input data, and transmit the input to an external server (not illustrated). Here, an external server may perform a feature extraction operation based on the acquired input data and acquire feature data. The external server may apply the feature data to an LSM learning model and an RNN learning model and output a final output value. In addition, the acquired final output value may be transmitted to the electronic apparatus 100.

According to another embodiment of the disclosure, the electronic apparatus 100 may perform an input data reception and feature extraction operation, and an external apparatus may perform an operation of applying the LSM learning model and the RNN learning model.

As described above, a plurality of operations are divided between the electronic apparatus 100 and the external apparatus according to hardware performance and process speed so that a machine learning algorithm may be implemented.

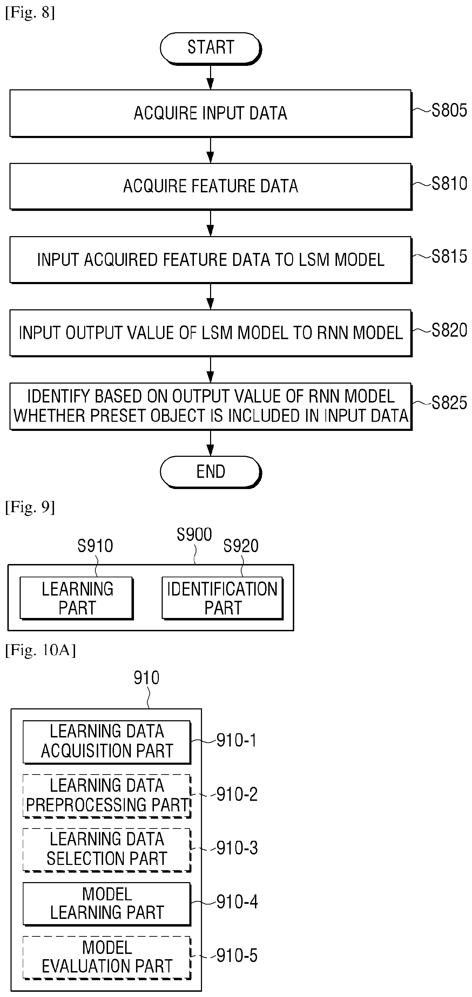

A specific detail about performing a machine learning algorithm in an external server will be described later with reference to FIGS. 9 to 11.

In FIG. 1B, the electronic apparatus 100 includes a display 150. However, the electronic apparatus 100 may not include the display 150 and may be an electronic apparatus 100 controlling an additional display apparatus.

FIG. 2 is a flowchart provided to explain a process of a machine learning algorithm, according to an embodiment of the disclosure.

Referring to FIG. 2, the electronic apparatus 100 may acquire an input data for machine learning algorithm, at operation S205. In addition, the electronic apparatus 100 may perform a feature extraction operation based on the acquired input data, at operation S210.

A feature extraction operation may be an operation for extracting a part desired by a user from an input data. Here, the feature extraction operation may include an operation of selecting a part of data or an operation of converting data.

For feature extraction operation, the electronic apparatus 100 may use a fast Fourier transform (FFT) corresponding to discrete Fourier transform (DFT). The electronic apparatus 100 may convert data using FTT so that data indicating periodicity may be acquired, and the converted data may denote a relationship between time and frequency. In addition, a frequency area of a data converted using FTT may be referred to as a spectrum, and analysis using the spectrum may be referred to as spectrum analysis.

The electronic apparatus 100 according to another embodiment of the disclosure may, to perform a feature extraction operation, use any one method from among Taylor series, wavelet transform or matrix decomposition. In addition, the electronic apparatus 100 may perform a feature extraction operation of input data through various methods other than the methods described above.

The electronic apparatus 100 may acquire a feature data through the feature extraction operation described above. In addition, the electronic apparatus 100 may input the acquired feature data to an RNN learning model. When the acquired feature data is applied to the RNN learning model, an output value corresponding to the corresponding learning model may be acquired.

The electronic apparatus 100 according to an embodiment of the disclosure may perform a data preprocessing operation using an LSM learning model before applying the data to the RNN learning model, at operation S215.

For example, the electronic apparatus 100 may apply a feature data acquired by the feature extraction operation to the LSM learning model. That is, the electronic apparatus 100 may set the feature data to the LSM learning model as an input value, and input an output value output by the LSM learning model again to the RNN learning model, at operation S220.

The LSM learning model may be a model for a data preprocessing operation. The electronic apparatus 100 may convert a data input to RNN using the LSM learning model in advance. In addition, when the electronic apparatus 100 uses an LSM learning model, the artificial intelligence algorithm performance can be improved as a whole and an error (misrecognition) occurrence rate can be reduced.

When the electronic apparatus 100 inputs a data converted using the LSM learning model to the RNN learning model, the RNN learning model may output an output value using a preset algorithm.

In addition, the electronic apparatus 100 may apply a soft-max function to the output value output by the RNN learning model, at operation S225.

A soft-max function may normalize an input value to a value between 0 and 1. In addition, a soft-max function may be used to indicate a probability distribution with respect to a K number of possible results.

The electronic apparatus 100 may apply a data output from the RNN learning model to the soft-max function and identify a final output value, at operation S230. Here, a final output value may denote a probability value.

The electronic apparatus 100 may output a final output value. In addition, the electronic apparatus 100 may identify whether an input data is further acquired, at operation S235. When no input data is further acquired, the electronic apparatus 100 may stop the operation, and analyze the data using the output at least one output value.

Meanwhile, when an input data is further acquired, the electronic apparatus 100 may perform a feature extraction operation with respect to the corresponding input data and apply the LSM learning model, the RNN learning model and the soft-max function and acquire a final output value again.

In an embodiment of the disclosure, a feature extraction operation may be performed with respect to an input data, and a data preprocessing operation may be performed before an RNN learning model is applied. Accordingly, an embodiment of the disclosure may be applicable to various embodiments in which an RNN learning model is used. For example, a data preprocessing operation of an embodiment of the disclosure may be applicable to voice recognition or image recognition.

The algorithm of an embodiment of the disclosure may be applicable to a voice recognition apparatus. Here, it may be very difficult for a learning model for detecting a wake-up word (WuW) to increase a true acceptance (TA) ratio and reduce a false acceptance (FA) ratio in a noisy environment. However, when a feature data is applied to an LSM learning model according to an embodiment of the disclosure and then input to an RNN model, it is possible to increase a true acceptance (TA) ratio and reduce a false acceptance (FA) ratio even in a noisy environment. When the electronic apparatus 100 is implemented as a smart speaker according to an embodiment of the disclosure, the smart speaker may include a powerful audio speaker system for reproducing music or other audio data, and a micro array for voice interface.

The electronic apparatus 100 performing a speech recognition function may further include a microphone (not illustrated).

A microphone in an active state may acquire a user speech. For example, a microphone may be integral with an upper side, front surface direction, lateral surface direction, etc. of the electronic apparatus 100. A microphone may be an element for acquiring a speech input. A microphone may include various elements such as a microphone collecting a user speech of an analog form, an amplifier circuit amplifying a collected user speech, an A/D transform circuit sampling an amplified user speech and transforming it to a digital signal, a filter circuit removing a noise component from a transformed digital signal, and the like.

Here, a type, size, disposition, etc. of a microphone may differ depending on a type of operation to be realized using a remote control apparatus, an exterior of a remote control apparatus, a usage pattern of a remote control apparatus, etc. For example, when a remote control apparatus is implemented as a hexahedron with a rectangular front surface, a microphone may be disposed on a front surface of the remote control apparatus.

The user may perform speech recognition through a microphone. Accordingly, all operations described herein may be performed solely by a microphone of the electronic apparatus 100 without a microphone included in an external apparatus.

In the example described above, the electronic apparatus 100 directly includes a microphone. In an actual implementation, a microphone may be an element included in an external apparatus.

In this case, when a microphone included in an external apparatus acquires an analog voice signal of the user, the analog voice signal acquired from the external apparatus may be transformed to a digital signal. In addition, the external apparatus may transmit the transformed digital signal to the electronic apparatus 100. In addition, the external apparatus may use a wireless communication scheme to transmit the transformed digital signal to the electronic apparatus 100, and the wireless communication method may be Bluetooth or Wi-Fi. In the example described above, a wireless communication scheme is Bluetooth or Wi-Fi. However, in an actual implementation, various wireless communication schemes other than Bluetooth or Wi-Fi may be used.

An external apparatus may be, for example, a remote control apparatus. A remote control apparatus may correspond to an apparatus for controlling a specific apparatus, which may correspond to a remote controller. The user may perform a speech voice recognition operation through a microphone attached to the remote controller.

Meanwhile, an external apparatus may correspond to a terminal such as a smartphone. The user may perform a speech recognition operation through a microphone included in a smartphone. In this case, the user may install a specific application and perform a speech recognition operation and transmit a recognized speech to the electronic apparatus 100. In addition, the user may control the electronic apparatus 100 by using a specific application.

In this case, a smartphone including a microphone may include a communicator comprising a circuitry using Bluetooth, Wi-Fi or infrared ray to transmit and receive data and to control the electronic apparatus 100. In this case, a communicator comprising a circuitry of an external apparatus may include a plurality of elements according to a communication scheme.

Meanwhile, an external apparatus including a microphone may, for data reception and controlling of the electronic apparatus 100, include a communicator comprising a circuitry using Bluetooth, Wi-Fi or infrared ray. In this case, a communicator comprising a circuitry of an external apparatus may include a plurality of elements according to a communication scheme.

In addition, the electronic apparatus 100 transceiving data with an external apparatus and acquiring a control command from an external apparatus may include a communicator comprising a circuitry using Bluetooth, Wi-Fi or infrared ray. In this case, a communicator comprising a circuitry of the electronic apparatus may include a plurality of elements according to a communication scheme.

Meanwhile, the electronic apparatus 100 according to an embodiment of the disclosure may transmit an acquired digital voice signal to a speech recognition external server. In addition, the speech recognition external server may perform a speech to text (STT) function converting a digital voice signal to text information. The speech recognition external server may perform the STT function and convert the digital voice signal to text information and retrieve information corresponding to the transformed text information. In addition, the speech recognition external server may transmit the information corresponding to the converted text information to the electronic apparatus 100. The speech recognition external server described above may simultaneously perform a speech to text (STT) function and a search function.

Meanwhile, it is also possible that the speech recognition external server performs only the speech to text (STT) function and that the search function is performed by an additional external server. In this case, an external server performing the speech to text function may convert a digital voice signal to text information, and transmit the converted text information to an additional external server performing the search function.

Meanwhile, the electronic apparatus 100 according to another embodiment may directly perform the speech to text (STT) function. The electronic apparatus 100 may convert a digital voice signal to text information, and transmit the converted text information to a speech recognition external server. In this case, the speech recognition external server may perform only a search function. In addition, the speech recognition external server may search for information corresponding to the converted text information, and transmit the found information to the electronic apparatus 100.

A smart speaker may include a wake-up word (WuW) engine including an LSM learning model and an RNN learning model.

A voice signal input to a smart speaker may be applied with a noise reduction algorithm and then merged into an one-channel audio stream, and read (identified) in units of at least one frame in the wake-up word (WuW) engine. Thereafter, the read (identified) voice signal may be converted to the feature data described above, in units of at least one frame and then, input to the RNN learning model via the LSM learning model. In this case, an output of the RNN learning model may be converted to a "wake-up word (WuW)' and "non-wake-up word (WuW)" probability by a post processing process (for example, "softmax" function). Thereafter, when a "wake-up word (WuW)" probability is sufficiently high (if it exceeds than a predefined threshold), it may be considered that a wake-up word (WuW) is recognized.

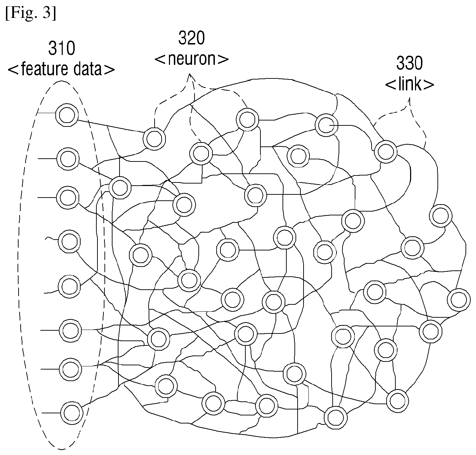

FIG. 3 is a diagram provided to explain a neural network of a liquid state machine (LSM) model.

Referring to FIG. 3, a neural network of an LSM learning model may include a feature data 310, a neuron 320 and a link 330.

The feature data 310 may denote a data after a feature extraction operation is performed. That is, the feature data 310 may denote a data after a feature extraction operation is performed in an acquired input data. The LSM learning model may acquire an output value using a data for which a feature extraction operation is performed.

The LSM learning model may include a neuron value of each neuron 320, and a weight corresponding to a link 330 between the respective neurons.

In addition, the LSM learning model may include a link between the respective neurons 320 and may not be divided into predetermined layers.

In FIG. 3, one neuron is linked to some neurons. However, it may be implemented that one neuron is actually linked to all the other neurons.

Meanwhile, in an LSM learning model according to another embodiment of the disclosure, the feature data 310 may be a sensor. When it is assumed that the feature data 310 is a data identified in a sensor, when the mathematical formula 2 is applied, the $I_i(n)$ may be replaced with $E_i(n)$. The $E_i(n)$ is an external input for an i-th sensor at a time n and thus, the electronic apparatus 100 may not acquire a spike within the system. In contrast, the electronic apparatus 100 may acquire a spike of the sensor according to the mathematical formula 2 from other units (interneurons).

FIG. 4 is a diagram provided to explain a calculation process of a liquid state machine (LSM) model.

FIG. 4A may denote a feature data input to an LSM learning model. Here, the feature data may be a data for which a feature extraction operation is performed.

FIG. 4A may be an Ii value which is acquired using the mathematical formula 2. The LSM learning model may use a weight and a spike to acquire an Ii(n) value. The electronic apparatus 100 may acquire an output value using a graph illustrated in FIG. 4A.

FIG. 4B may be acquired using the mathematical formula 1. A value of vi(n) acquired using the mathematical formula 1 may correspond to a neuron value of a neuron.

The electronic apparatus 100 may identify a case where a neuron value of a specific neuron is greater than a vth value, and acquire a data in the form of a spike.

FIG. 4C is a diagram illustrating a data of a spike form. If a neuron value of a specific neuron is greater than a threshold vth in FIG. 4B, the LSM learning model may set Si(n) as 1. In addition, if a neuron value of a specific neuron is less than a threshold vth in FIG. 4B, the LSM learning model may set Si(n) as 0.

FIG. 5 is a diagram provided to explain an information entropy of a liquid state machine (LSM) model.

The NT may denote a target number of spikes generated in a preset unit time period. In addition, the iteration number may denote the number of times NT is changed, and the NT may be changed by a preset unit time period and a preset unit time period may be one iteration.

Referring to FIG. 5A, an LSM learning model may be set so that an NT is increased as the algorithm progresses.

In addition, referring to FIG. 5B, the LSM learning model may acquire an information entropy using the mathematical formula 5, and acquire the sum of information entropies of each neuron. Here, the LSM learning model may group the sum of information entropies by a preset unit time period and calculate the sum. The LSM learning model may divide a preset unit time period into batches or mini-batches.

When NT is set to increase according to a predetermined time as illustrated in FIG. 5A, a sum of information entropies as illustrated in FIG. 5B may be acquired. Referring to FIG. 5B, the LSM learning model may acquire a data in the form in which a sum of information entropies increases and then decreases.

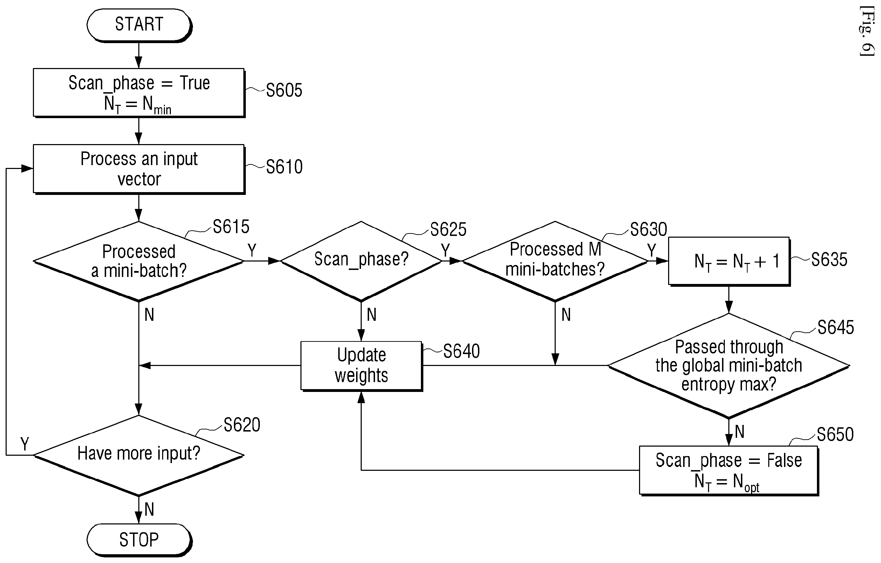

FIG. 6 is a diagram provided to explain a learning algorithm of a liquid state machine (LSM) model.

An LSM learning model may set a target number of spikes in a preset unit time period, at operation S605. Here, a target number may denote the number of spikes of a preset unit time period desired by a user. A target number may be used to determine a weight corresponding to a link between the respective neurons along with the number of spikes generated in the respective neurons (See mathematical formulas 3 and 4).

The LSM learning model may identify whether it is in a scan state, in an algorithm learning process. The LSM learning model may classify a scan state as True (phase 1), and a non-scan state as False (phase 2).

The LSM learning model may, when starting to operate, set a scan state as True, and set a target number NT as Nmin. Here, the Nmin may denote a minimum value of a target number. The LSM learning model according to an embodiment of the disclosure increases a target number NT and thus, an initially-set target number value may be a minimum value. Here, the Nmin may be a preset arbitrary value.

The LSM learning model may, after an initial value is set, acquire a feature data, at operation S610. Here, the feature data may denote a data for which a feature extraction operation is performed in the acquired data.

The LSM learning model may identify whether data has been acquired by a preset unit time period, at operation S615. Here, the LSM learning model may set a preset unit time period as a mini-batch. When a data is not input by a mini-batch, the LSM learning model may acquire a new feature data.

When a data is input by a mini-batch, the LSM learning model may identify whether it is in a scan state. When the LSM learning model is not in a scan state, a weight may be updated at operation S620, and it may be identified whether a new feature data is to be acquired, at operation S620. Here, a weight may denote a weight corresponding to a link between the respective neurons.

When the LSM learning model is in a scan state, it may be identified whether a feature data has been acquired by an M number of mini-batches, at operation S630. Here, an M number of mini-batches may denote a unit time obtained by multiplying a time corresponding to a mini-batch by M times. When a feature data is not acquired by the M number of mini-batches, the LSM learning model may update a weight at operation S620, and identify whether to acquire a new feature data at operation S620.

Here, when the data is analyzed by the M number of mini-batches, the LSM learning model may use an average spike number of a preset unit time period (1 mini-batch).

When the feature data is acquired by the M number of mini-batches, the LSM learning model may be set so that the target number NT is increased by a preset number, at operation S635. For example, when it is identified that a time of the M number of mini-batches has elapsed, the LSM learning model may increase a value of NT by + 1.

In addition, the LSM learning model may calculate an information entropy corresponding to a time corresponding to the M number of mini-batches. In addition, the LSM learning model may calculate a sum of information entropies of all calculated neurons. The mathematical formula 5 may be referred regarding a calculation process.

The LSM learning model may acquire a sum of information entropies of all neurons, and identify whether the acquired value has a maximum value, at operation S645. Here, a data on a sum of information entropy may be similar to FIG. 5B. The LSM learning model may identify an iteration number including a maximum value in a data on a sum of information entropy. When a maximum value is not identified in the data on the sum of information entropy, the LSM learning model may update a weight at operation S620, and identify whether a new feature data is to be acquired, at operation S620.

When the LSM learning model identifies a maximum value in the data on the sum of information entropies with respect to all neurons, the LSM learning model may set whether it is in a scan state as false, at operation S650. Here, the LSM learning model may increase an NT value by a preset range to identify a maximum value.

In addition, the LSM learning model may identify an iteration corresponding to the identified maximum value, and set a target number NT set in the corresponding iteration as an optimum target number. Referring to FIG. 6, an optimum target number may be expressed as Nopt.

After the LSM learning model converts a scan state to false and sets an optimum value for NT, the LSM learning model may update a weight at operation S620, and identify whether a new feature data is to be acquired, at operation S620.

Here, when no new feature data value is acquired, the LSM learning model may stop an algorithm operation.

When a new feature data value is acquired, the LSM learning model may acquire the feature data, at operation S610. Here, the LSM learning model may not change a target number because a scan state has been converted to false. The LSM learning model may fix a target number to an optimum value and change only the weight until no further feature data is acquired.

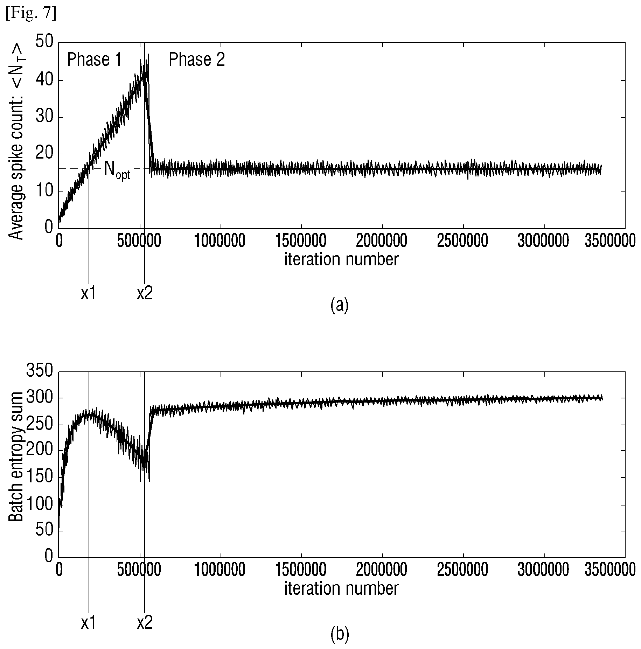

FIG. 7 is a diagram provided to explain an information entropy of a liquid state machine (LSM) model according to FIG. 6.

An LSM learning model algorithm according to FIG. 6 may identify whether an LSM learning model is in a scan state. As described above, when an LSM learning model is in a scan state, it may be indicated as True or phase 1, and when an LSM learning model is not in a scan state, it may be indicated as false or phase 2.

Referring to FIG. 7, an LSM learning model may increase a target number up to an iteration corresponding to x2. In addition, referring to FIG. 7B, the LSM learning model may identify a maximum value from among data on a sum of information entropies acquired during the iteration corresponding to the x2. An iteration corresponding to the corresponding maximum value may be x1. In addition, the LSM learning model may set a target number NT corresponding to the x1 as an optimum value Nopt. For example, the LSM learning model may set a target number corresponding to the x1 (NT = 17) as an optimum value. In addition, the LSM learning model may convert a scan state to phase 2 (false) with respect to iterations after the x2. In a phase 2 (false) state, the LSM learning model may maintain a target number at an optimum value of 17.

Referring to FIG. 7A, it can be understood that a target number is maintained at 17 from iterations after the x2. In addition, referring to FIG. 7B, a data on a sum of information entropies is maintained at a maximum value.

FIG. 8 is a flowchart provided to explain a controlling method of an electronic apparatus, according to an embodiment of the disclosure.

In a controlling method of an electronic apparatus in which a liquid-state machine (LSM) model and a recurrent neural networks (RNN) model are stored according to an embodiment of the disclosure, the electronic apparatus 100 may acquire an input data, at operation S805.

In addition, the electronic apparatus 100 may acquire a feature data from the acquired input data, at operation S810.

In addition, the electronic apparatus 100 may input the acquired feature data to the LSM model, at operation S815. In addition, the electronic apparatus 100 may input an output value of the LSM model to the RNN model, at operation S820. In addition, the electronic apparatus 100 may identify whether a preset object is included in the input data based on the output value of the RNN model, at operation S825.

The RNN model may be trained by a sample data related to the preset object. The LSM model may include a plurality of neurons linked to each other. A weight applied to a link between the plurality of neurons may be identified based on a spike at which a neuron value is greater than or equal to a preset threshold by a preset unit time period.

Here, the LSM model may, if the number of spikes is greater than a target number for a preset time period in an arbitrary neuron from among a plurality of neurons, reduce a weight corresponding to a neuron link, and if the number of spikes is less than the target number for the preset time period in the arbitrary neuron, increase a weight corresponding to the neuron link.

In addition, a weight of link between an arbitrary transmitting neuron and a receiving neuron corresponding to the transmitting neuron from among a plurality of neurons may be acquired based on a first number of spikes at which a neuron value of the transmitting neuron is greater than or equal to a preset threshold in a preset unit time period and a second number of spikes at which a neuron value of the receiving neuron is greater than or equal to the preset threshold in the preset unit time period.

In addition, a weight of link in a current time period may be acquired by adding a change amount to a weight of link in a previous time period, and the change amount may be acquired based on a value calculated by a target number, first number and second number of spikes.

In addition, the LSM model may set an initial target number of spikes as a preset minimum value, and increase a target number set for each preset unit time period by a preset number.

In addition, the LSM model may acquire an information entropy value of a transmitting neuron in units of a preset time period based on a difference of occurrence time between spikes of the transmitting neuron, when information entropy values of a plurality of neurons are acquired, add the acquired entropy values, and set a target number set in a time period at which the sum reaches a maximum value as a final target number.

In addition, the LSM model may, if the second number is greater than the target number, set a change amount to be a negative number, if the second number is less than the target number, set a change amount to be a positive number, and if the second number is equal to the target number, set a change amount to be 0.

Here, a weight may be identified based on a mathematical formula shown below:

$$\delta w_{ij} = -\alpha \left| w_{ij} \right| n_i \delta n_j$$

The wij may be a weight corresponding to a link between an i neuron which is a transmitting neuron and a j neuron which is a receiving neuron. The $\delta$wij may be a change amount of weight. The $\alpha$ may be a preset constant. It may be that ni = Ni / NT (where the Ni is the number of spikes of the i neuron in a preset unit time period, and the NT is a target number of spikes). It may be that nj = Nj / NT (where the Nj is the number of spikes of the j neuron in a preset unit time period, and the NT is a target number of spikes). It may be that $\delta$nj = nj - 1.

In a controlling method of an electronic apparatus according to FIG. 8, the LSM learning model may be applied as a data preprocessing operation before the RNN learning model is applied. Here, a feature data may be converted once again using the LSM learning model, and as a result, an artificial intelligence learning process can be performed well and the error (misrecognition) can be reduced.

It is described herein that one electronic apparatus 100 performs all operations. However, an operation of actually acquiring an input data may be performed by the electronic apparatus 100 and an artificial intelligence learning process may be performed by an external server. For example, the electronic apparatus 100 may acquire a speech data and transmit it to an external server, and the external server may analyze the speech data. The external server may transmit the analyzed result value again to the electronic apparatus 100.

Meanwhile, the controlling method of the electronic apparatus as illustrated in FIG. 8 may be executed on the electronic apparatus including the configuration as illustrated in FIG. 1, and may be executed even on an electronic apparatus including another configuration.

FIG. 9 is a block diagram provided to explain a configuration of an electronic apparatus for training and using an artificial intelligence model, according to an embodiment of the disclosure.

Referring to FIG. 9, an external server 900 may include at least one of a learning part 910 or an identification part 920.

The learning part 910 may provide or train an artificial intelligence model including criteria for acquiring an output data using a learning data. The learning part 910 may provide an artificial intelligence including identification criteria using a collected learning data.

For example, the learning part 910 may provide, train or update an artificial intelligence model for acquiring an output data desired by a user using speech data, image data and text information as learning data.

The identification part 920 may acquire a predetermined output data using a predetermined data as an input data of the trained artificial intelligence model.

For example, the identification part 920 may acquire (estimate or infer) an output data by using speech data, image data and text information as an input data of the trained artificial intelligence model.

In an embodiment of the disclosure, the learning part 910 and the identification part 920 may be included in the external server 900. However, this is only an example, and the learning part 910 and the identification part 920 may be mounted within the electronic apparatus 100. For example, at least a part of the learning part 910 and at least a part of the identification part 920 may be implemented as a software module or manufactured as at least one hardware chip and mounted in the electronic apparatus 100.

For example, at least one of the learning part 910 or the identification part 920 may be manufactured in the form of a hardware chip exclusive for artificial intelligence (AI) or may be manufactured as a part of the existing general purpose processor (e.g., CPU or application processor) or a dedicated graphics processor (e.g., GPU) and mounted in the various electronic apparatuses described above.

The hardware chip exclusive for artificial intelligence is an exclusive processor specialized for probability calculation, which may show high parallel processing performance as compared with the existing general purpose processor so that calculation operations of the artificial intelligence field such as machine learning may be processed quickly.

When the learning part 910 and the identification part 920 are implemented as a software module (or a program module including an instruction), the software module may be stored on non-transitory computer readable media. In this case, the software module may be provided by an operating system (O/S) or by a predetermined application. Alternatively, a part of the software module may be provided by the operating system (O/S) and the remaining part may be provided by the predetermined application.

In this case, the learning part 910 and the identification part 920 may be mounted in one electronic apparatus or may be respectively mounted in additional electronic apparatuses. For example, one of the learning part 910 or the identification part 920 may be included in the electronic apparatus 100 and the remaining one may be included in the external server 900. In addition, via a wire or wirelessly, model information constructed by the learning part 910 may be provided to the identification part 910 and data input to the learning part 910 may be provided to the learning part 910 as an additional learning data.

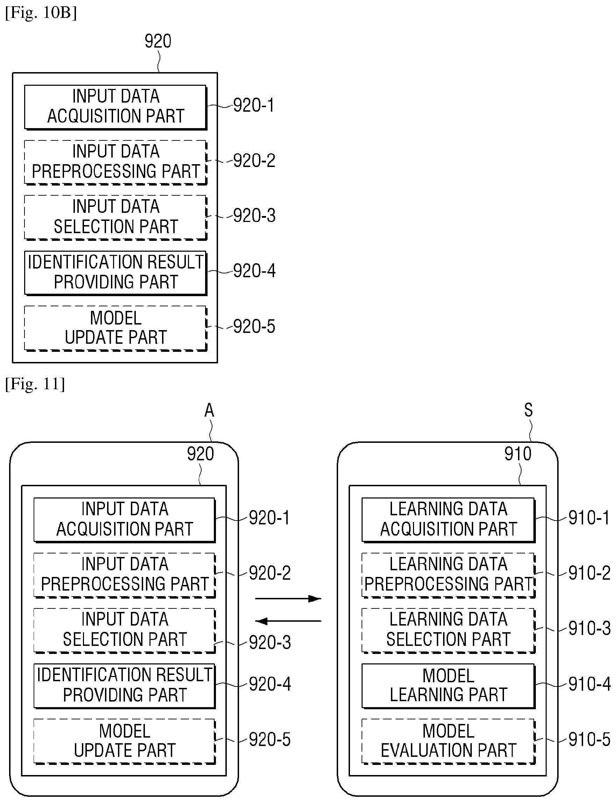

FIG. 10 is a block diagram of a specific configuration of a learning part and an identification part, according to an embodiment of the disclosure. FIG. 11 is a block diagram of a specific configuration of a learning part and an identification part, according to an embodiment of the disclosure.

Referring to FIG. 10A, the learning part 910 according to some embodiments may include a learning data acquisition part 910-1 and a model learning part 910-4. In addition, the learning part 910 may further selectively include at least one of a learning data preprocessing part 910-2, a learning data selection part 910-3 or a model evaluation part 910-5.

The learning data acquisition part 910-1 may acquire a learning data necessary for an artificial intelligence model for acquiring an output data. In an embodiment of the disclosure, the learning data acquisition part 910-1 may acquire speech data, image data and text information as learning data. In addition, to acquire an output data, the learning data acquisition part 910-1 may acquire user history information, user preference information, etc. as learning data. The learning data may be a data collected or tested by the learning part or the manufacturer of the learning part 910.

The model learning part 910-4 may train an artificial intelligence model to include criteria for acquiring output data, using a learning data. For example, the model learning part 910-4 may train an artificial intelligence model through supervised learning which utilizes at least a part of learning data as criteria for acquiring output data. Alternatively, the model learning part 910-4 may, for example, train itself using a learning data without special supervision so that an artificial intelligence model may be trained through unsupervised learning discovering criteria for acquiring output data. Further, the model learning part 910-4 may, for example, train an artificial intelligence model through reinforcement learning which uses a feedback as to whether an identification result according to learning is correct. In addition, the model learning part 910-4 may, for example, train an artificial intelligence model by using a learning algorithm including error back-propagation or gradient descent.

In addition, the model learning part 910-4 may learn criteria for selection as to what learning data is to be used to acquire output data using an input data.

The model learning part 910-4 may, when a plurality of pre-constructed artificial intelligence models are present, identify an artificial intelligence model with high relevancy between input learning data and basic learning data as a data recognition model to train. In this case, the basic learning data may be pre-classified according to the type of data, and the artificial intelligence model may be pre-constructed according to the type of data. For example, the basic learning data may be pre-classified by various criteria such as an area where the learning data is generated, a time at which the learning data is generated, a size of the learning data, a genre of the learning data, a creator of the learning data, a type of object in the learning data, etc.

When the artificial intelligence model is trained, the model learning part 910-4 may store the trained artificial intelligence model. In this case, the model learning part 910-4 may store the trained artificial intelligence model in a memory of the external server 900. Alternatively, the model learning part 910-4 may store the trained artificial intelligence model in a server connected to the external server 900 via a wired or wireless network or in a memory of an electronic apparatus.

The data learning part 910 may further include a learning data preprocessing part 910-2 and a learning data selection part 910-3 to improve an identification result of an artificial intelligence model or to save time or resources necessary for generating an artificial intelligence model.

The learning data preprocessing part 910-2 may preprocess an acquired data so that the acquired data may be utilized for learning to acquire output data. The learning data preprocessing part 910-2 may process the acquired data to a preset format so that the model learning part 910-4 may utilize the acquired data to acquire output data. For example, the learning data preprocessing part 910-2 may remove a text that is unnecessary when the artificial intelligence model provides a response (for example, adverb, exclamation, etc.) from among the input information.

The learning data selection part 910-3 may select data necessary for learning from among the data acquired by the learning data acquisition part 910-1 and the data preprocessed by the learning data preprocessing part 910-2. The selected learning data may be provided to the model learning part 910-4. The learning data selection part 910-3 may select learning data necessary for learning from among the acquired or processed data according to preset selection criteria. In addition, the learning data selection part 910-3 may select learning data according to preset selection criteria by learning of the model learning part 910-4.

The learning part 910 may further include a model evaluation unit 910-5 to improve an identification result of the artificial intelligence model.

The model evaluation part 910-5 may input evaluation data to the artificial intelligence model, and if the identification result output from the evaluation data does not satisfy predetermined criteria, allow the model learning part 910-4 to train again. In this case, the evaluation data may be a predefined data to evaluate the artificial intelligence model.

For example, if the number or the ratio of the evaluation data whose identification result is not accurate among the identification results of the trained artificial intelligence model for the evaluation data exceeds a predetermined threshold value, the model evaluation part 910-5 may evaluate that predetermined criteria are not satisfied.

On the other hand, when there are a plurality of trained artificial intelligence models, the model evaluation part 910-5 may evaluate whether each of the trained artificial intelligence models satisfies the predetermined criteria and determine the model which satisfies the predetermined criteria as the final artificial intelligence model. In this case, when there are a plurality of models satisfying the predetermined criteria, the model evaluation part 910-5 may determine any one or a predetermined number of models previously set in descending order of the evaluation score as the final artificial intelligence model.

Referring to FIG. 10B, the identification part 920 according to some embodiments may include an input data acquisition part 920-1 and an identification result providing part 920-4.

In addition, the identification part 920 may further selectively include at least one of an input data preprocessing part 920-2, an input data selection part 920-3 or a model update part 920-5.

The input data acquisition part 920-1 may acquire a data necessary for acquiring output data. The identification result providing part 920-4 may apply an input data acquired by the input data acquisition part 920-1 to the trained artificial intelligence model as an input value, and acquire an output data. The identification result providing part 920-4 may apply a data selected by the input data preprocessing part 920-2 or by the input data selection part 920-3 which will be described later, to the artificial intelligence model as an input value, and acquire an identification result.

In an embodiment, the identification result providing part 920-4 may apply speech data, image data, text information, etc. acquired by the input data acquisition part 920-1 to the trained artificial intelligence model, and acquire an output data.

The identification part 920 may further include an input data preprocessing part 920-2 and an input data selection part 920-3 to improve an identification result of an artificial intelligence model or to save time or resources necessary for generating an artificial intelligence model.

The input data preprocessing part 920-2 may preprocess the acquired data so that the acquired data may be utilized in a process of acquiring output data. The input data preprocessing part 920-2 may process the acquired data to a preset format so that the identification result providing part 920-4 may utilize the acquired data to acquire output data.

The input data selection part 920-3 may select a data necessary for providing a response from among a data acquired by the input data acquisition part 920-1 or a data preprocessed by the input data preprocessing part 920-2. The selected data may be provided to the identification result providing part 920-4. The input data selection part 920-3 may select some or all of the acquired or preprocessed data according to preset selection criteria for providing a response. In addition, the input data selection part 920-3 may select a data according to preset selection criteria by training of the model learning part 910-4.

The model update part 920-5 may control an artificial intelligence model to be updated based on an evaluation of an identification result provided by the identification result providing part 920-4. For example, the model update part 920-5 may provide an identification result provided by the identification result providing part 920-4 to the model learning part 910-4, and thereby request the model learning part 910-4 to further train or update the artificial intelligence model. For example, the model update part 920-5 may retrain the artificial intelligence model based on feedback information according to a user input.

FIG. 11 is a diagram illustrating an example in which the electronic apparatus and an external server S are interlocked with each other to learn and identify a data, according to an embodiment of the disclosure.

Referring to FIG. 11, the external server S may learn criteria for acquiring an output data with respect to a learning data, and the electronic apparatus 100 may provide an output data based on a learning result of the server S.

In this case, a model learning part 910-4 of the server S may perform a function of the learning part 910 illustrated in FIG. 9. That is, the model learning part 910-4 of the server S may learn criteria as to whether to use speech data, image data, text information, etc. to acquire output data and as to how to acquire output data using the information.

In addition, the identification result providing part 920-4 of the electronic apparatus 100 may apply a data selected by the input data selection part 920-3 to an artificial intelligence model provided by the server S, and acquire an output data. Alternatively, the identification result providing part 920-4 of the electronic apparatus 100 may acquire the artificial intelligence model provided by the server S from the server S, and acquire an output data using the acquired artificial intelligence model.

The methods according to the above-described embodiments may be realized as applications that may be installed in the existing electronic apparatus 100.

Further, the methods according to the above-described embodiments may be realized by upgrading the software or hardware of the existing electronic apparatus 100.

The above-described embodiments may be executed through an embedded server in the electronic apparatus 100 or through an external server outside the electronic apparatus 100.

In a non-transitory computer readable medium for storing a computer instruction that, when executed by a processor of an electronic apparatus in which a liquid-state machine (LSM) model and a recurrent neural networks (RNN) model are stored, causes the electronic apparatus to perform an operation, the operation includes acquiring a feature data from an input data. The operation includes inputting the acquired feature data to the LSM model. The operation includes inputting an output value of the LSM model to the RNN model. The operation includes identifying whether a preset object is included in an input data based on an output value of the RNN model. The RNN model may be trained by a sample data related to the preset object. The LSM model may include a plurality of neurons linked to each other. A weight applied to a link between the plurality of neurons may be identified based on a spike at which a neuron value is greater than or equal to a preset threshold by a preset unit time period.

Meanwhile, the controlling method of an electronic apparatus 100 according to the above-described embodiments may be implemented as a program and provided to the electronic apparatus 100. In particular, a program including the controlling method of an electronic apparatus 100 may be stored and provided in a non-transitory computer readable medium.

Various embodiments described above may be embodied in a recording medium that may be read by a computer or a similar apparatus to the computer by using software, hardware, or a combination thereof. In a hardware configuration, the embodiments described in the specification may be realized using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, or electrical units for performing other functions. In some cases, embodiments described herein may be implemented by the processor 120 itself. In a software configuration, various embodiments described in the specification such as a procedure and a function may be embodied as separate software modules. Each of the software modules may perform one or more functions and operations described in the specification.

Meanwhile, computer instructions for performing a processing operation in the electronic apparatus 100 according to the above-described various embodiments of the disclosure may be stored in a non-transitory computer readable medium. Computer instructions stored in this non-transitory computer readable medium may, when executed by a processor of a specific device, cause the specific device to perform a processing operation in the electronic apparatus 100 according to the above-described various embodiments.

The non-transitory computer readable medium is not limited to a medium that permanently stores data therein, e.g., a register, a cache, a memory, or the like, but can be a medium that semi-permanently stores data therein and is readable by a device. For example, the non-transitory computer readable medium may include a compact disc (CD), a digital versatile disc (DVD), a hard disc, a Blu-ray disc, a memory card, or a read only memory (ROM).

The foregoing embodiments and advantages are merely exemplary and are not to be construed as limiting the disclosure. The present teaching can be readily applied to other types of apparatuses and processes. Also, the description of the embodiments of the disclosure is intended to be illustrative, and not to limit the scope of the claims, and many alternatives, modifications, and variations will be apparent to those skilled in the art.

**Claims**

1. An electronic apparatus, comprising:

a microphone;
a storage configured to store a liquid-state machine (LSM) model and a recurrent neural networks (RNN) model; and
a processor configured to:

input a feature data (310) acquired from an input data for machine learning algorithm to the LSM model for performing a data preprocessing operation, wherein the input data is a speech data acquired through the microphone;
process the input feature data (310) using the LSM model;
input an output value output by the LSM model to the RNN model;
process the output value output by the LSM model using the RNN model; and
identify whether a preset object is included in the input data based on an output value output by the RNN model, wherein the preset object is a wake-up word,
wherein the RNN model is trained by a sample data related to the preset object to provide an output value indicating whether the preset object is included in input data,
wherein the LSM model includes a plurality of interlinked neurons (320),
wherein a weight applied to a link (330) between the plurality of interlinked neurons (320) is identified based on a spike at which a neuron value is greater than or equal to a preset threshold in a preset unit time,

wherein the feature data (310) is data after a feature extraction operation is performed in the acquired input data, and wherein the LSM model during training, using the feature data (310) for which the feature extraction operation is performed, based on a number of the spikes being greater than a target number during the preset unit time in an arbitrary neuron (320) from among the plurality of interlinked neurons, reduces a weight corresponding to a link (330) of the neuron (320), and based on a number of the spikes being less than the target number during the preset unit time period in the arbitrary neuron, increases a weight corresponding to a link (330) of the neuron (320).

2. The electronic apparatus as claimed in claim 1, wherein a weight of a link (330) between an arbitrary transmitting neuron (320) and a receiving neuron (320) corresponding to the transmitting neuron (330) from among the plurality of interlinked neurons is acquired based on a first number of spikes at which a neuron value of the transmitting neuron is greater than or equal to the preset threshold in the preset unit time and a second number of spikes at which a neuron value of the receiving neuron is greater than or equal to the preset threshold in the preset unit time.

3. The electronic apparatus as claimed in claim 2, wherein a weight of the link (330) in a current unit time is acquired by adding a change amount to a weight of the link in a previous unit time, and wherein the change amount is acquired based on a value calculated by a target number of the spikes, the first number and the second number.

4. The electronic apparatus as claimed in claim 3, wherein the LSM model sets an initial target number of the spikes to a preset minimum value, and increases the set target number by a preset number by the preset unit time.

5. The electronic apparatus as claimed in claim 4, wherein the LSM model acquires an information entropy value of the transmitting neuron (320) by the preset unit time based on a difference of occurrence time between spikes of the transmitting neuron (320), based on an information entropy value of each of the plurality of interlinked neurons (320) being acquired, acquires a sum of the acquired entropy values, and sets a target number set in a time period where the sum reaches a maximum value as a final target number.

6. The electronic apparatus as claimed in claim 3, wherein the LSM model, based on the second number (320) being greater than the target number, sets the change amount to be a negative number, based on the second number being less than the target number, sets the change amount to be a positive number, and based on the second number being equal to the target number, sets the change amount to be 0.

7. The electronic apparatus as claimed in claim 6, wherein the weight is identified based on the mathematical formula shown below:

$$\delta w_{ij} = -\alpha \left| w_{ij} \right| n_i \delta n_j$$

where wij is a weight corresponding to a link (330) from an i neuron (320) which is a transmitting neuron (320) to a j neuron which is a receiving neuron, $\delta$wij is a change amount of the weight, $\alpha$ is a preset constant, ni = Ni / NT (where Ni is the number of spikes of the i neuron in a preset unit time, and NT is a target number of spikes), and nj = Nj / NT (where Nj is the number of spikes of the j neuron in a preset unit time, and NT is a target number of spikes), and $\delta$nj=nj-1.

8. The electronic apparatus as claimed in claim 1, wherein the feature data (310) is at least one of a Fourier transform coefficients or a Mel-frequency cepstral coefficients (MFCC), and wherein the processor is configured to input at least one of the Fourier transform coefficients or the Mel-frequency cepstral coefficients (MFCC) to the LSM model.

9. The electronic apparatus as claimed in claim 1, wherein the LSM model converts the feature data (310) changing over time to a spatio-temporal pattern based on an activity of the plurality of interlinked neurons, and outputs the converted spatio-temporal pattern.

10. A controlling method of an electronic apparatus for storing a liquid-state machine (LSM) model and a recurrent neural networks (RNN) model, the controlling method comprises:

    acquiring a feature data (310) from an input data for machine learning algorithm, wherein the input data is a speech data;
    inputting the acquired feature data (310) to the LSM model for performing a data preprocessing operation;
    processing the input feature data (310) using the LSM model;
    inputting an output value output by the LSM model to the RNN model;

processing the output value output by the LSM model using the RNN model; and

identifying whether a preset object is included in the input data based on an output value output by the RNN model, wherein the preset object is a wake-up word,

wherein the RNN model is trained by a sample data related to the preset object to provide an output value indicating whether the preset object is included in input data,

wherein the LSM model includes a plurality of interlinked neurons (320),

wherein a weight applied to a link (330) between the plurality of interlinked neurons (320) is identified based on a spike at which a neuron value is greater than or equal to a preset threshold by in a preset unit time,

wherein the feature data (310) is data after a feature extraction operation is performed in the acquired input data, and

wherein the LSM model during training, using the feature data (310) for which the feature extraction operation is performed, based on a number of the spikes being greater than a target number during the preset unit time in an arbitrary neuron (320) from among the plurality of interlinked neurons, reduces a weight corresponding to a link (330) of the neuron, and based on a number of the spikes being less than the target number during the preset unit time period in the arbitrary neuron, increases a weight corresponding to a link of the neuron (320).

11. The controlling method as claimed in claim 11, wherein the LSM model, based on a number of the spikes being greater than a target number during the preset unit time in an arbitrary neuron (320) from among the plurality of interlinked neurons, reduces a weight corresponding to a link (330) of the neuron, and based on a number of the spikes being less than the target number during the preset unit time period in the arbitrary neuron, increases a weight corresponding to a link of the neuron (320).

12. The controlling method as claimed in claim 11, wherein a weight of a link (330) between an arbitrary transmitting neuron (320) and a receiving neuron (320) corresponding to the transmitting neuron (320) from among the plurality of interlinked neurons is acquired based on a first number of spikes at which a neuron value of the transmitting neuron (320) is greater than or equal to the preset threshold in the preset unit time and a second number of spikes at which a neuron value of the receiving neuron is greater than or equal to the preset threshold in the preset unit time.

13. A non-transitory computer readable medium configured to store computer instructions that, when executed by a processor of an electronic apparatuses in which a liquid-state machine (LSM) model and a recurrent neural networks (RNN) model are stored, causes the electronic apparatus to perform an operation, the operation comprising:

acquiring a feature data (310) from an input data for machine learning algorithm, wherein the input data is a speech;

inputting the acquired feature data (310) to the LSM model for performing a data preprocessing operation;

processing the input feature data (310) using the LSM model;

inputting an output value output by the LSM model to the RNN model; and

processing the output value output by the LSM model using the RNN model;

identifying whether a preset object is included in the input data based on an output value by the RNN model, wherein the preset object is a wake-up word,

wherein the RNN model is trained by a sample data related to the preset object to provide an output value indicating whether the preset object is included in input data,

wherein the LSM model includes a plurality of interlinked neurons (320),

wherein a weight applied to a link between the plurality of interlinked neurons is identified based on a spike at which a neuron value is greater than or equal to a preset threshold in a preset unit time,

wherein the feature data (310) is data after a feature extraction operation is performed in the acquired input data, and

wherein the LSM model during training, using the feature data (310) for which the feature extraction operation is performed, based on a number of the spikes being greater than a target number during the preset unit time in an arbitrary neuron (320 from among the plurality of interlinked neurons, reduces a weight corresponding to a link (330) of the neuron (320), and based on a number of the spikes being less than the target number during the preset unit time period in the arbitrary neuron, increases a weight corresponding to a link of the neuron (320).

**Patentansprüche**

1. Elektronische Vorrichtung, umfassend:

ein Mikrofon;
einen Speicher, der dazu konfiguriert ist, ein Modell einer Flüssigzustandsmaschine (LSM) und ein Modell rekurrenter neuronaler Netze (RNN) zu speichern; und

einen Prozessor, der zu Folgendem konfiguriert ist:

Eingeben von Merkmalsdaten (310), die von eingegebenen Daten für maschinellen Lernalgorithmus erfasst werden, in das LSM-Modell zum Durchführen eines Datenvorverarbeitungsvorgangs, wobei die eingegebenen Daten Sprachdaten sind, die durch das Mikrofon erfasst werden;

Verarbeiten der eingegebenen Merkmalsdaten (310) unter Verwendung des LSM-Modells;

Eingeben eines Ausgabewertes, der durch das LSM-Modell ausgegeben wird, in das RNN-Modell;

Verarbeiten des Ausgabewertes, der durch das LSM-Modell ausgegeben wird, unter Verwendung des RNN-Modells; und

Identifizieren, ob ein vorab festgelegtes Objekt in den eingegebenen Daten enthalten ist, basierend auf einem Ausgabewert, der durch das RNN-Modell ausgegeben wird, wobei das vorab festgelegte Objekt ein Aufwachwort ist,

wobei das RNN-Modell durch Abtastdaten trainiert wird, die sich auf das vorab festgelegte Objekt beziehen, um einen Ausgabewert bereitzustellen, der angibt, ob das vorab festgelegte Objekt in eingegebenen Daten enthalten ist,

wobei das LSM-Modell eine Vielzahl von miteinander verbundenen Neuronen (320) enthält,

wobei ein Gewicht, das auf eine Verbindung (330) zwischen der Vielzahl von miteinander verbundenen Neuronen (320) angewendet wird, basierend auf einer Spitze identifiziert wird, bei der ein Neuronenwert größer als oder gleich einem vorab festgelegten Schwellenwert in einer vorab festgelegten Einheitszeit ist,

wobei die Merkmalsdaten (310) Daten sind, nachdem ein Merkmalsextraktionsvorgang in den erfassten eingegebenen Daten durchgeführt wird, und

wobei das LSM-Modell während eines Trainings unter Verwendung der Merkmalsdaten (310), für die der Merkmalsextraktionsvorgang durchgeführt wird, basierend darauf, dass eine Anzahl der Spitzen größer als eine Zielanzahl während der vorab festgelegten Einheitszeit in einem willkürlichen Neuron (320) aus der Vielzahl von miteinander verbundenen Neuronen ist, ein Gewicht entsprechend einer Verbindung (330) des Neurons (320) reduziert und basierend darauf, dass eine Anzahl der Spitzen weniger als die Zielanzahl während der vorab festgelegten Einheitszeitperiode in dem willkürlichen Neuron ist, ein Gewicht entsprechend einer Verbindung (330) des Neurons (320) erhöht.

2. Elektronische Vorrichtung nach Anspruch 1, wobei ein Gewicht einer Verbindung (330) zwischen einem willkürlichen sendenden Neuron (320) und einem empfangenden Neuron (320) entsprechend dem sendenden Neuron (330) aus der Vielzahl von miteinander verbundenen Neuronen basierend auf einer ersten Anzahl an Spitzen, bei denen ein Neuronenwert des sendenden Neurons größer als oder gleich dem vorab festgelegten Schwellenwert in der vorab festgelegten Einheitszeit ist, und einer zweiten Anzahl an Spitzen, bei denen ein Neuronenwert des empfangenden Neurons größer als oder gleich dem vorab festgelegten Schwellenwert in der vorab festgelegten Einheitszeit ist, erfasst wird.

3. Elektronische Vorrichtung nach Anspruch 2, wobei ein Gewicht der Verbindung (330) in einer aktuellen Einheitszeit erfasst wird, indem eine Änderungsmenge zu einem Gewicht der Verbindung in einer vorherigen Einheitszeit hinzugefügt wird, und wobei die Änderungsmenge basierend auf einem Wert erfasst wird, der durch eine Zielanzahl der Spitzen, die erste Anzahl und die zweite Anzahl berechnet wird.

4. Elektronische Vorrichtung nach Anspruch 3, wobei das LSM-Modell eine anfängliche Zielanzahl der Spitzen auf einen vorab festgelegten Mindestwert festlegt und die festgelegte Zielanzahl um eine vorab festgelegte Anzahl um die vorab festgelegte Einheitszeit erhöht.

5. Elektronische Vorrichtung nach Anspruch 4, wobei das LSM-Modell einen Informationsentropiewert des sendenden Neurons (320) um die vorab festgelegte Einheitszeit basierend auf einer Differenz von Auftrittszeit zwischen Spitzen des sendenden Neurons (320) erfasst, basierend darauf, dass ein Informationsentropiewert von jedem aus der Vielzahl von miteinander verbundenen Neuronen (320) erfasst wird, eine Summe der erfassten Entropiewerte erfasst und eine Zielanzahl, die in einer Zeitperiode festgelegt wird, in der die Summe einen Maximalwert erreicht, als eine finale Zielanzahl festlegt.

6. Elektronische Vorrichtung nach Anspruch 3, wobei das LSM-Modell, basierend darauf, dass die zweite Anzahl (320) größer als die Zielanzahl ist, die Änderungsmenge als eine negative Anzahl festlegt, basierend darauf, dass die zweite Anzahl weniger als die Zielanzahl ist, die Änderungsmenge als eine positive Anzahl festlegt und basierend darauf, dass die zweite Anzahl gleich der Zielanzahl ist, die Änderungsmenge als 0 festlegt.

7. Elektronische Vorrichtung nach Anspruch 6, wobei das Gewicht basierend auf der unten gezeigten mathematischen Formel identifiziert wird:

$$\delta w_{ij} = -\alpha \left| w_{ij} \right| n_i \delta n_j \,,$$

wobei wij ein Gewicht entsprechend einer Verbindung (330) von einem i-Neuron (320), das ein sendendes Neuron (320) ist, zu einem j-Neuron, das ein empfangendes Neuron ist, ist, $\delta$wij eine Änderungsmenge des Gewichts ist, $\alpha$ eine vorab festgelegte Konstante ist, ni = Ni / NT (wobei Ni die Anzahl an Spitzen des i-Neurons in einer vorab festgelegten Einheitszeit ist und NT eine Zielanzahl an Spitzen ist) und nj = Nj / NT (wobei Nj die Anzahl an Spitzen des j-Neurons in einer vorab festgelegten Einheitszeit ist und NT eine Zielanzahl an Spitzen ist) und $\delta$nj=nj-1.

8. Elektronische Vorrichtung nach Anspruch 1, wobei die Merkmalsdaten (310) zumindest eines von einem Fourier-Transformationskoeffizienten oder einem Mel-Frequenz-Cepstral-Koeffizienten (MFCC) ist, und wobei der Prozessor dazu konfiguriert ist, zumindest einen von den Fourier-Transformationskoeffizienten oder den Mel-Frequenz-Cepstral-Koeffizienten (MFCC) in das LSM-Modell einzugeben.

9. Elektronische Vorrichtung nach Anspruch 1, wobei das LSM-Modell die Merkmalsdaten (310), die sich im Laufe der Zeit ändern, basierend auf einer Aktivität der Vielzahl von miteinander verbundenen Neuronen in ein räumlich-zeitliches Muster umwandelt und das umgewandelte räumlich-zeitliche Muster ausgibt.

10. Steuerungsverfahren einer elektronischen Vorrichtung zum Speichern eines Modells einer Flüssigzustandsmaschine (LSM) und eines Modells rekurrenter neuronaler Netze (RNN), wobei das Steuerungsverfahren Folgendes umfasst:

Erfassen von Merkmalsdaten (310) von eingegebenen Daten für maschinellen Lernalgorithmus, wobei die eingegebenen Daten Sprachdaten sind;
Eingeben der erfassten Merkmalsdaten (310) in das LSM-Modell zum Durchführen eines Datenvorverarbeitungsvorgangs;
Verarbeiten der eingegebenen Merkmalsdaten (310) unter Verwendung des LSM-Modells;
Eingeben eines Ausgabewertes, der durch das LSM-Modell ausgegeben wird, in das RNN-Modell;
Verarbeiten des Ausgabewertes, der durch das LSM-Modell ausgegeben wird, unter Verwendung des RNN-Modells; und
Identifizieren, ob ein vorab festgelegtes Objekt in den eingegebenen Daten enthalten ist, basierend auf einem Ausgabewert, der durch das RNN-Modell ausgegeben wird, wobei das vorab festgelegte Objekt ein Aufwachwort ist, wobei das RNN-Modell durch Abtastdaten trainiert wird, die sich auf das vorab festgelegte Objekt beziehen, um einen Ausgabewert bereitzustellen, der angibt, ob das vorab festgelegte Objekt in eingegebenen Daten enthalten ist, wobei das LSM-Modell eine Vielzahl von miteinander verbundenen Neuronen (320) enthält, wobei ein Gewicht, das auf eine Verbindung (330) zwischen der Vielzahl von miteinander verbundenen Neuronen (320) angewendet wird, basierend auf einer Spitze identifiziert wird, bei der ein Neuronenwert größer als oder gleich einem vorab festgelegten Schwellenwert in einer vorab festgelegten Einheitszeit ist, wobei die Merkmalsdaten (310) Daten sind, nachdem ein Merkmalsextraktionsvorgang in den erfassten eingegebenen Daten durchgeführt wird, und wobei das LSM-Modell während eines Trainings unter Verwendung der Merkmalsdaten (310), für die der Merkmalsextraktionsvorgang durchgeführt wird, basierend darauf, dass eine Anzahl der Spitzen größer als eine Zielanzahl während der vorab festgelegten Einheitszeit in einem willkürlichen Neuron (320) aus der Vielzahl von miteinander verbundenen Neuronen ist, ein Gewicht entsprechend einer Verbindung (330) des Neurons reduziert und basierend darauf, dass eine Anzahl der Spitzen weniger als die Zielanzahl während der vorab festgelegten Einheitszeitperiode in dem willkürlichen Neuron ist, ein Gewicht entsprechend einer Verbindung des Neurons (320) erhöht.

11. Steuerungsverfahren nach Anspruch 11, wobei das LSM-Modell, basierend darauf, dass eine Anzahl der Spitzen größer als eine Zielanzahl während der vorab festgelegten Einheitszeit in einem willkürlichen Neuron (320) aus der Vielzahl von miteinander verbundenen Neuronen ist, ein Gewicht entsprechend einer Verbindung (330) des Neurons reduziert und basierend darauf, dass eine Anzahl der Spitzen weniger als die Zielanzahl während der vorab festgelegten Einheitszeitperiode in dem willkürlichen Neuron ist, ein Gewicht entsprechend einer Verbindung des Neurons (320) erhöht.

12. Steuerungsverfahren nach Anspruch 11, wobei ein Gewicht einer Verbindung (330) zwischen einem willkürlichen sendenden Neuron (320) und einem empfangenden Neuron (320) entsprechend dem sendenden Neuron (320) aus der Vielzahl von miteinander verbundenen Neuronen basierend auf einer ersten Anzahl an Spitzen, bei denen ein Neuronenwert des sendenden Neurons (320) größer als oder gleich dem vorab festgelegten Schwellenwert in der vorab festgelegten Einheitszeit ist, und einer zweiten Anzahl an Spitzen, bei denen ein Neuronenwert des empfangenden Neurons größer als oder gleich dem vorab festgelegten Schwellenwert in der vorab festgelegten Einheitszeit ist, erfasst wird.

13. Nichtflüchtiges computerlesbares Medium, das dazu konfiguriert ist, Computeranweisungen zu speichern, die, wenn durch einen Prozessor einer elektronischen Vorrichtung ausgeführt, in der ein Modell einer Flüssigzustandsmaschine (LSM) und ein Modell rekurrenter neuronaler Netze (RNN) gespeichert sind, die elektronische Vorrichtung veranlassen, einen Vorgang durchzuführen, wobei der Vorgang Folgendes umfasst:

> Erfassen von Merkmalsdaten (310) von eingegebenen Daten für maschinellen Lernalgorithmus, wobei die eingegebenen Daten Sprache sind;
> Eingeben der erfassten Merkmalsdaten (310) in das LSM-Modell zum Durchführen eines Datenvorverarbeitungsvorgangs;
> Verarbeiten der eingegebenen Merkmalsdaten (310) unter Verwendung des LSM-Modells;
> Eingeben eines Ausgabewertes, der durch das LSM-Modell ausgegeben wird, in das RNN-Modell; und
> Verarbeiten des Ausgabewertes, der durch das LSM-Modell ausgegeben wird, unter Verwendung des RNN-Modells;
> Identifizieren, ob ein vorab festgelegtes Objekt in den eingegebenen Daten enthalten ist, basierend auf einem Ausgabewert durch das RNN-Modell, wobei das vorab festgelegte Objekt ein Aufwachwort ist,
> wobei das RNN-Modell durch Abtastdaten trainiert wird, die sich auf das vorab festgelegte Objekt beziehen, um einen Ausgabewert bereitzustellen, der angibt, ob das vorab festgelegte Objekt in eingegebenen Daten enthalten ist,
> wobei das LSM-Modell eine Vielzahl von miteinander verbundenen Neuronen (320) enthält,
> wobei ein Gewicht, das auf eine Verbindung zwischen der Vielzahl von miteinander verbundenen Neuronen angewendet wird, basierend auf einer Spitze identifiziert wird, bei der ein Neuronenwert größer als oder gleich einem vorab festgelegten Schwellenwert in einer vorab festgelegten Einheitszeit ist,
wobei die Merkmalsdaten (310) Daten sind, nachdem ein Merkmalsextraktionsvorgang in den erfassten eingegebenen Daten durchgeführt wird, und
wobei das LSM-Modell während eines Trainings unter Verwendung der Merkmalsdaten (310), für die der Merkmalsextraktionsvorgang durchgeführt wird, basierend darauf, dass eine Anzahl der Spitzen größer als eine Zielanzahl während der vorab festgelegten Einheitszeit in einem willkürlichen Neuron (320) aus der Vielzahl von miteinander verbundenen Neuronen ist, ein Gewicht entsprechend einer Verbindung (330) des Neurons (320) reduziert und basierend darauf, dass eine Anzahl der Spitzen weniger als die Zielanzahl während der vorab festgelegten Einheitszeitperiode in dem willkürlichen Neuron ist, ein Gewicht entsprechend einer Verbindung des Neurons (320) erhöht.

## Revendications

1. Appareil électronique comprenant :

> un microphone ;
> une mémoire configurée pour stocker un modèle de machine à état liquide (LSM) et un modèle de réseaux neuronaux récurrents (RNN) ; et
> un processeur configuré pour :

>> entrer une donnée de caractéristique (310) acquise à partir d'une donnée d'entrée pour un algorithme d'apprentissage automatique dans le modèle LSM afin d'effectuer une opération de prétraitement de données, dans lequel la donnée d'entrée est une donnée vocale acquise par le microphone ;
>> traiter la donnée de caractéristique d'entrée (310) à l'aide du modèle LSM ;
>> entrer une valeur de sortie délivrée par le modèle LSM au modèle RNN ;
>> traiter la valeur de sortie délivrée par le modèle LSM à l'aide du modèle RNN ; et
>> identifier si un objet prédéfini est compris dans la donnée d'entrée sur la base d'une valeur de sortie délivrée par le modèle RNN, dans lequel l'objet prédéfini est un mot de réveil,
>> dans lequel le modèle RNN est entraîné par une donnée d'échantillon relative à l'objet prédéfini pour fournir une valeur de sortie indiquant si l'objet prédéfini est compris dans la donnée d'entrée,

dans lequel le modèle LSM comprend une pluralité de neurones interliés (320),

dans lequel un poids appliqué à une liaison (330) entre la pluralité de neurones interliés (320) est identifié sur la base d'un pic auquel une valeur de neurone est supérieure ou égale à un seuil prédéfini dans une unité de temps prédéfinie,

dans lequel la donnée de caractéristique (310) est une donnée après la réalisation d'une opération d'extraction de caractéristique dans la donnée d'entrée acquise, et

dans lequel le modèle LSM pendant l'entraînement, à l'aide de la donnée de caractéristique (310) pour laquelle l'opération d'extraction de caractéristique est effectuée, sur la base du fait qu'un nombre de pics soit supérieur à un nombre cible pendant l'unité de temps prédéfinie dans un neurone arbitraire (320) parmi la pluralité de neurones interliés, réduit un poids correspondant à une liaison (330) du neurone (320), et sur la base du fait qu'un nombre de pics soit inférieur au nombre cible pendant la période d'unité de temps prédéfinie dans le neurone arbitraire, augmente un poids correspondant à une liaison (330) du neurone (320).

2. Appareil électronique selon la revendication 1, dans lequel un poids d'une liaison (330) entre un neurone d'émission arbitraire (320) et un neurone de réception (320) correspondant au neurone d'émission (330) parmi la pluralité de neurones interliés est acquis sur la base d'un premier nombre de pics auxquelles une valeur de neurone du neurone d'émission est supérieure ou égale au seuil prédéfini dans l'unité de temps prédéfinie et d'un deuxième nombre de pics auxquelles une valeur de neurone du neurone de réception est supérieure ou égale au seuil prédéfini dans l'unité de temps prédéfinie.

3. Appareil électronique selon la revendication 2, dans lequel un poids de la liaison (330) dans une unité de temps en cours est acquis en ajoutant une quantité de changement à un poids de la liaison dans une unité de temps précédente, et

dans lequel la quantité de changement est acquise sur la base d'une valeur calculée par un nombre cible des pics, le premier nombre et le deuxième nombre.

4. Appareil électronique selon la revendication 3, dans lequel le modèle LSM définit un nombre cible initial des pics à une valeur minimale prédéfinie, et augmente le nombre cible défini d'un nombre prédéfini par l'unité de temps prédéfinie.

5. Appareil électronique selon la revendication 4, dans lequel le modèle LSM acquiert une valeur d'entropie d'informations du neurone d'émission (320) par l'unité de temps prédéfinie sur la base d'une différence de temps d'occurrence entre les pics du neurone d'émission (320), sur la base du fait qu'une valeur d'entropie d'informations de chacun de la pluralité de neurones interliés (320) soit en cours d'acquisition, acquiert une somme des valeurs d'entropie acquises, et définit un nombre cible défini dans une période de temps où la somme atteint une valeur maximale en tant que nombre cible final.

6. Appareil électronique selon la revendication 3, dans lequel le modèle LSM, sur la base du fait que le deuxième nombre (320) soit supérieur au nombre cible, définit la quantité de changement pour être un nombre négatif, sur la base du fait que le deuxième nombre soit inférieur au nombre cible, définit la quantité de changement pour être un nombre positif, et sur la base du fait que le deuxième nombre soit égal au nombre cible, définit la quantité de changement pour être égale à 0.

7. Appareil électronique selon la revendication 6, dans lequel le poids est identifié sur la base de la formule mathématique donnée ci-dessous :

$$\delta w_{ij} = -\alpha \left| w_{ij} \right| n_i \delta n_j$$

où wij est un poids correspondant à une liaison (330) d'un neurone i (320) qui est un neurone d'émission (320) à un neurone j qui est un neurone de réception, $\delta$wij est une quantité de changement du poids, $\alpha$ est une constante prédéfinie, ni = Ni / NT (où Ni est le nombre de pics du neurone i dans une unité de temps prédéfinie, et NT est un nombre cible de pics), et nj = Nj / NT (où Nj est le nombre de pics du neurone j dans une unité de temps prédéfinie, et NT est un nombre cible de pics), et $\delta$nj = nj-1.

8. Appareil électronique selon la revendication 1, dans lequel la donnée de caractéristique (310) est au moins l'un de coefficients de transformée de Fourier ou de coefficients cepstraux de fréquence Mel (MFCC), et

dans lequel le processeur est configuré pour entrer au moins l'un des coefficients de transformée de Fourier ou des coefficients cepstraux de fréquence Mel (MFCC) dans le modèle LSM.

9. Appareil électronique selon la revendication 1, dans lequel le modèle LSM convertit la donnée de caractéristiques (310) changeant au fil du temps en un motif spatio-temporel sur la base d'une activité de la pluralité de neurones interliés, et délivre le motif spatio-temporel converti.

10. Procédé de commande d'un appareil électronique destiné à stocker un modèle de machine à état liquide (LSM) et un modèle de réseaux neuronaux récurrents (RNN), le procédé de commande comprend :

l'acquisition d'une donnée de caractéristique (310) à partir d'une donnée d'entrée pour un algorithme d'apprentissage automatique, dans lequel la donnée d'entrée est une donnée vocale ;

l'entrée de la donnée de caractéristique acquise (310) dans le modèle LSM pour effectuer une opération de prétraitement de données ;

le traitement de la donnée de caractéristique d'entrée (310) à l'aide du modèle LSM ;

l'entrée d'une valeur de sortie délivrée par le modèle LSM au modèle RNN ;

le traitement de la valeur de sortie délivrée par le modèle LSM à l'aide du modèle RNN ; et

l'identification si un objet prédéfini est compris dans la donnée d'entrée sur la base d'une valeur de sortie délivrée par le modèle RNN, dans lequel l'objet prédéfini est un mot de réveil,

dans lequel le modèle RNN est entraîné une donnée d'échantillon relative à l'objet prédéfini pour fournir une valeur de sortie indiquant si l'objet prédéfini est compris dans la donnée d'entrée,

dans lequel le modèle LSM comprend une pluralité de neurones interliés (320),

dans lequel un poids appliqué à une liaison (330) entre la pluralité de neurones interliés (320) est identifié sur la base d'un pic auquel une valeur de neurone est supérieure ou égale à un seuil prédéfini dans une unité de temps prédéfinie,

dans lequel la donnée de caractéristique (310) est une donnée après la réalisation d'une opération d'extraction de caractéristiques dans la donnée d'entrée acquise, et

dans lequel le modèle LSM pendant l'entraînement, à l'aide de la donnée de caractéristique (310) pour laquelle l'opération d'extraction de caractéristiques est effectuée, sur la base du fait qu'un nombre de pics soit supérieur à un nombre cible pendant l'unité de temps prédéfinie dans un neurone arbitraire (320) parmi la pluralité de neurones interliés, réduit un poids correspondant à une liaison (330) du neurone (320), et sur la base du fait qu'un nombre de pics soit inférieur au nombre cible pendant la période d'unité de temps prédéfinie dans le neurone arbitraire, augmente un poids correspondant à une liaison du neurone (320).

11. Procédé de commande selon la revendication 11, dans lequel le modèle LSM, sur la base du fait qu'un nombre de pics soit supérieur à un nombre cible pendant l'unité de temps prédéfinie dans un neurone arbitraire (320) parmi la pluralité de neurones interliés, réduit un poids correspondant à une liaison (330) du neurone, et sur la base du fait qu'un nombre de pics soit inférieur au nombre cible pendant la période d'unité de temps prédéfinie dans le neurone arbitraire, augmente un poids correspondant à une liaison du neurone (320).

12. Procédé de commande selon la revendication 11, dans lequel un poids d'une liaison (330) entre un neurone d'émission arbitraire (320) et un neurone de réception (320) correspondant au neurone d'émission (320) parmi la pluralité de neurones interliés est acquis sur la base d'un premier nombre de pics auxquels une valeur de neurone du neurone d'émission est supérieure ou égale au seuil prédéfini dans l'unité de temps prédéfinie et d'un deuxième nombre de pics auxquels une valeur de neurone du neurone de réception est supérieure ou égale au seuil prédéfini dans l'unité de temps prédéfinie.

13. Support non transitoire lisible par ordinateur configuré pour stocker des instructions informatiques qui, lorsqu'elles sont exécutées par un processeur d'un appareil électronique dans lequel un modèle de machine à état liquide (LSM) et un modèle de réseaux neuronaux récurrents (RNN) sont stockés, amène l'appareil électronique à effectuer une opération, l'opération comprenant :

l'acquisition d'une donnée de caractéristique (310) à partir d'une donnée d'entrée pour un algorithme d'apprentissage automatique, dans lequel la donnée d'entrée est une parole ;

l'entrée de la donnée de caractéristique acquise (310) dans le modèle LSM pour effectuer une opération de prétraitement de données ;

le traitement de la donnée de caractéristique entrée (310) à l'aide du modèle LSM ;

l'entrée d'une valeur de sortie délivrée par le modèle LSM au modèle RNN ; et

le traitement de la valeur de sortie délivrée par le modèle LSM à l'aide du modèle RNN ;

l'identification si un objet prédéfini est compris dans la donnée d'entrée sur la base d'une valeur de sortie délivrée par le modèle RNN, dans lequel l'objet prédéfini est un mot de réveil,

dans lequel le modèle RNN est entraîné par une donnée d'échantillon relative à l'objet prédéfini pour fournir une valeur de sortie indiquant si l'objet prédéfini est compris dans la donnée d'entrée,

dans lequel le modèle LSM comprend une pluralité de neurones interliés (320),

dans lequel un poids appliqué à une liaison entre la pluralité de neurones interliés est identifié sur la base d'un pic auquel une valeur de neurone est supérieure ou égale à un seuil prédéfini dans une unité de temps prédéfinie,

dans lequel la donnée de caractéristique (310) est une donnée après la réalisation d'une opération d'extraction de caractéristique dans la donnée d'entrée acquise, et

dans lequel le modèle LSM pendant l'entraînement, à l'aide de la donnée de caractéristique (310) pour laquelle l'opération d'extraction de caractéristiques est effectuée, sur la base du fait qu'un nombre de pics soit supérieur à un nombre cible pendant l'unité de temps prédéfinie dans un neurone arbitraire (320 parmi la pluralité de neurones interliés, réduit un poids correspondant à une liaison (330) du neurone (320), et sur la base du fait qu'un nombre de pics soit inférieur au nombre cible pendant la période d'unité de temps prédéfinie dans le neurone arbitraire, augmente un poids correspondant à une liaison du neurone (320).

[Fig. 1A]

100

110

120

STORAGE ↔ PROCESSOR

[Fig. 1B]

100

120

110 — STORAGE

130 —

| 131 | WI-FI CHIP |
| 132 | BLUETOOTH CHIP |
| 133 | WIRELESS COMMUNICATION CHIP |
| 134 | NFC CHIP |

126

RAM ~121

ROM ~122

GRAPHIC PROCESSING PART ~124

MAIN CPU 123

FIRST INTERFACE 125-1

NTH INTERFACE 125-n

USER INTERFACE PART 140

DISPLAY 150

SPEAKER 160

[Fig. 2]

```
              ┌──────────┐
              │  START   │
              └────┬─────┘
                   ↓
        ┌──────────────────────┐
   ┌───→│   receive input      │──S205
   │    └──────────┬───────────┘
   │               ↓
   │    ┌──────────────────────┐
   │    │  Feature extraction  │──S210
   │    └──────────┬───────────┘
   │               ↓
   │    ┌──────────────────────┐
   │    │        LSM           │──S215
   │    └──────────┬───────────┘
   │               ↓
   │    ┌──────────────────────┐
   │    │        RNN           │──S220
   │    └──────────┬───────────┘
   │               ↓
   │    ┌──────────────────────┐
   │    │      soft-max        │──S225
   │    └──────────┬───────────┘
   │               ↓         ──S230
   │    ┌──────────────────────┐
   │    │  identify probability│───→ Output
   │    └──────────┬───────────┘
   │               ↓
   │  Y      ◇───────────◇
   └────────◇ Have more input? ◇──S235
            ◇───────────◇
                   ↓ N
              ┌──────────┐
              │   STOP   │
              └──────────┘
```

[Fig. 3]

[Fig. 4]

(a)

(b)

(c)

[Fig. 5]

(a)

(b)

[Fig. 6]

EP 3 776 378 B1

[Fig. 7]

(a)

(b)

[Fig. 8]

```
                    ( START )
                        │
                        ▼
        ┌───────────────────────────────┐
        │      ACQUIRE INPUT DATA        │──── S805
        └───────────────────────────────┘
                        │
                        ▼
        ┌───────────────────────────────┐
        │     ACQUIRE FEATURE DATA       │──── S810
        └───────────────────────────────┘
                        │
                        ▼
        ┌───────────────────────────────┐
        │ INPUT ACQUIRED FEATURE DATA TO │──── S815
        │          LSM MODEL             │
        └───────────────────────────────┘
                        │
                        ▼
        ┌───────────────────────────────┐
        │ INPUT OUTPUT VALUE OF LSM MODEL│──── S820
        │        TO RNN MODEL            │
        └───────────────────────────────┘
                        │
                        ▼
        ┌───────────────────────────────┐
        │ IDENTIFY BASED ON OUTPUT VALUE │
        │ OF RNN MODEL WHETHER PRESET    │──── S825
        │ OBJECT IS INCLUDED IN INPUT    │
        │ DATA                           │
        └───────────────────────────────┘
                        │
                        ▼
                    (  END  )
```

[Fig. 9]

```
           S910        S900   S920
    ┌────────────────────────────────────┐
    │  ┌───────────┐   ┌───────────────┐  │
    │  │ LEARNING  │   │ IDENTIFICATION│  │
    │  │   PART    │   │     PART      │  │
    │  └───────────┘   └───────────────┘  │
    └────────────────────────────────────┘
```

[Fig. 10A]

```
                    910
    ┌────────────────────────────────┐
    │  ┌──────────────────────────┐  │
    │  │    LEARNING DATA         │──── 910-1
    │  │   ACQUISITION PART       │  │
    │  └──────────────────────────┘  │
    │  ┌ ─ ─ ─ ─ ─ ─ ─ ─ ─ ─ ─ ─ ┐  │
    │  │    LEARNING DATA         │──── 910-2
    │    PREPROCESSING PART        │
    │  └ ─ ─ ─ ─ ─ ─ ─ ─ ─ ─ ─ ─ ┘  │
    │  ┌ ─ ─ ─ ─ ─ ─ ─ ─ ─ ─ ─ ─ ┐  │
    │  │    LEARNING DATA         │──── 910-3
    │  │    SELECTION PART        │  │
    │  └ ─ ─ ─ ─ ─ ─ ─ ─ ─ ─ ─ ─ ┘  │
    │  ┌──────────────────────────┐  │
    │  │        MODEL             │──── 910-4
    │  │    LEARNING PART         │  │
    │  └──────────────────────────┘  │
    │  ┌ ─ ─ ─ ─ ─ ─ ─ ─ ─ ─ ─ ─ ┐  │
    │  │        MODEL             │──── 910-5
    │  │    EVALUATION PART       │  │
    │  └ ─ ─ ─ ─ ─ ─ ─ ─ ─ ─ ─ ─ ┘  │
    └────────────────────────────────┘
```

[Fig. 10B]

920

| INPUT DATA ACQUISITION PART | 920-1 |
| INPUT DATA PREPROCESSING PART | 920-2 |
| INPUT DATA SELECTION PART | 920-3 |
| IDENTIFICATION RESULT PROVIDING PART | 920-4 |
| MODEL UPDATE PART | 920-5 |

[Fig. 11]

A    920

| INPUT DATA ACQUISITION PART | 920-1 |
| INPUT DATA PREPROCESSING PART | 920-2 |
| INPUT DATA SELECTION PART | 920-3 |
| IDENTIFICATION RESULT PROVIDING PART | 920-4 |
| MODEL UPDATE PART | 920-5 |

S    910

| LEARNING DATA ACQUISITION PART | 910-1 |
| LEARNING DATA PREPROCESSING PART | 910-2 |
| LEARNING DATA SELECTION PART | 910-3 |
| MODEL LEARNING PART | 910-4 |
| MODEL EVALUATION PART | 910-5 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHANG YONG et al.** A Digital Liquid State Machine With Biologically Inspired Learning and Its Application to Speech Recognition. *IEEE TRANSACTIONS ON NEURAL NETWORK AND LEARNING SYSTEMS*, vol. 26 (11)

- D-LSM: Deep Liquid State Machine with-unsupervised recurrent reservoir tuning. **WANG QIAN et al.** 23RD INTERNATIONAL CONFERENCE ON PATTERN RECOGNITION (ICPR). IEEE, 04 December 2016, 2652-2657